(19) Europäisches Patentamt
European Patent Office
Office européen des brevets

(11) EP 1 063 644 B1

(12) # EUROPEAN PATENT SPECIFICATION

(45) Date of publication and mention of the grant of the patent:
**17.08.2005 Bulletin 2005/33**

(51) Int Cl.[7]: **G11B 7/095**

(21) Application number: **00305348.5**

(22) Date of filing: **23.06.2000**

(54) **Method of compensating for tilt and/or defocus and apparatus therefor**

Verfahren zur Kompensation von Neigung und/oder Defokussierung, und Vorrichtung für dasselbige

Procédé et appareil de compensation d'inclinaison et/ou de défocalisation

(84) Designated Contracting States:
**DE FR GB NL**

(30) Priority: **25.06.1999 KR 9924297**
**09.09.1999 KR 9938398**
**09.09.1999 KR 9938399**

(43) Date of publication of application:
**27.12.2000 Bulletin 2000/52**

(73) Proprietor: **SAMSUNG ELECTRONICS CO., LTD.**
**Suwon-City, Kyungki-do (KR)**

(72) Inventors:
- **Lee, Kyung-geun**
  **Pundang-gu, Seongnam-city, Kyungki-do (KR)**
- **Ko, Jung-wan**
  **Yongin-city, Kyungki-do (KR)**
- **Joo, Sung-sin, c/o Samsung Electronics Co. Ltd.**
  **3-dong, Paldal-gu Suwon-City, Kyungki-do (KR)**
- **Park, In-sik**
  **Kwonseon-gu, Suwon-city, Kyungki-do (KR)**

(74) Representative: **Chugg, David John et al**
**Appleyard Lees,**
**15 Clare Road**
**Halifax, West Yorkshire HX1 2HY (GB)**

(56) References cited:
**EP-A- 0 385 498**
**US-A- 4 358 774**
**US-A- 4 631 712**
**US-A- 4 710 908**
**US-A- 5 383 175**
**US-A- 5 483 512**
**US-A- 5 838 646**

- **PATENT ABSTRACTS OF JAPAN vol. 2000, no. 01, 31 January 2000 (2000-01-31) & JP 11 273115 A (HITACHI LTD), 8 October 1999 (1999-10-08)**
- **PATENT ABSTRACTS OF JAPAN vol. 2000, no. 04, 31 August 2000 (2000-08-31) & JP 2000 003526 A (PIONEER ELECTRON CORP), 7 January 2000 (2000-01-07)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a method of compensating for tilt and/or defocus and an apparatus therefor, and more particularly, to a method of compensating for tilt/defocus by controlling the power and/or time required for recording according to the amount of tilt/defocus of an optical recording medium, and an apparatus therefor.

When tilt or defocus occurs or tilt and defocus occur at the same time in an optical disc which requires high density recording, the effect of tilt and/or defocus becomes much greater than in a disc which uses red laser. Therefore, a method of compensating for the effect is required.

When an object lens with a large numerical aperture (NA) is used and blue laser of a 400 nm short wavelength is used instead of using existing red laser (650 nm wavelength) in order to obtain a higher density, a system is affected as shown in the following table 1. The factor which affects recording the most is a reduction in margin according to the increase in tilt and shallowing of the focal depth.

Meanwhile, tolerances for radial tilt and tangential tilt in a current digital versatile disc-random access memory (DVD-RAM) are 0.7°and 0.3°, respectively. The basic characteristics of a disc must be met, while remaining within these tolerances. For example, power, such as write power and erase power, must be maintained at level which is sufficient to obtain the write characteristics defined in a disc specification.

Table 1

| Item | Effect | NA0. 6 | NA0.65 | NA 0.85 | Effect in NA0.6 NA0.85 |
|---|---|---|---|---|---|
| Spot diameter (relative size) | $\lambda/NA$ | 1 | 0.93 | 0.70 | Capacity doubled |
| Focal depth (relative depth) | $\lambda/NA^2$ | 1 | 0.85 | 0.50 | Servo control bandwidth doubled |
| Disc tilt (relative margin amount) | $\lambda/tNA^3$ | 1 | 0.79 | 0.35 | Strict disc tilt allowance |
| Disc thickness change (relative allowance) | $\lambda/NA^4$ | 1 | 0.73 | 0.25 | Strict thickness allowance in disc manufacturing |

However, when blue laser of a short wavelength (400 nm) is used to meet the increasing demand for high density recording, the effect of tilt becomes greater. That is, when a higher NA is used in order to obtain the same substrate thickness and high density, the value of coma aberration becomes much greater. Equation 1 expresses coma aberration.

$$Comma\ Aberration = \left(\frac{n^{2-1}}{2n^3} * d * \frac{NA^3}{wavelength}\right) * \left(tilt * \frac{\pi}{180}\right) \quad (1)$$

Here, *n* is the refractivity of a substrate, *d* is the thickness of the substrate, and NA is the numerical aperture of an object lens.

Figure 1 illustrates coma aberration in 3 dimensions according to wavelength and NA, when the thickness of a substrate is 0.6mm, the refractivity of a substrate is 1.5, and tilt is 0.5°, using the equation 1. The figure shows that coma aberration increases as wavelength becomes shorter and numerical aperture becomes greater.

Figure 2 illustrates changes in beam intensity with respect to tilt, and the abscissa represents tilt while the ordinate represents beam peak intensity. According to Figure 2, as tilt increases, recording beam intensity decreases at a wavelength of 400 nm more rapidly at a wavelength of 650 nm. If recording is performed under this condition, the desired length and width of a mark cannot be recorded. As the NA increases, beam intensity decreases even at the same wavelength of 400 nm and 0.6 mm substrate thickness (t).

Figure 3 illustrates changes in beam spot size with respect to tilt, and the abscissa represents tilt, while the ordinate shows the normalized value of beam size with respect to tilt for a tilt of 0° (Beam $width_{tilt}$/beam $width_{tilt=0}$). The figure shows that as tilt increases, spot size increases more at a wavelength of 400 nm than at a wavelength of 650 nm, and, as NA increases, spot size increases even at the same wavelength of 400 nm.

Figure 4 illustrates changes in the maximum temperature-to-write power ratio with respect to tilt, and the abscissa represents tilt, while the ordinate shows the normalized value of the maximum temperature with respect to tilt for a tilt of 0° ($Tmax_{tilt}/Tmax_{tilt=0}$). The figure shows that as tilt increases, the maximum temperature (Tmax) decreases more rapidly at a wavelength of 400 nm than at a wavelength of 650 nm, and, as write power ($P_w$) increases, the maximum temperature (Tmax) decreases even at the same wavelength of 400 nm. However, at a wavelength of 650 nm, the maximum temperature is insensitive to changes in write power ($P_w$).

In addition, as the luminance effect of a short wavelength laser diode, which is used as a light source, lowers when the power emitted therefrom changes according to temperature change, the laser diode must emit luminance stably in order to read information recorded on a disc without erros and to raise the reliability of an optical disc system.

Figure 5 illustrates changes in the maximum temperature-to-write time ratio with respect to tilt, and the abscissa represents tilt, while the ordinate shows the normalized value of the maximum temperature with respect to tilt for a tilt of 0° ($Tmax_{tilt}/Tmax_{tilt=0}$). As in Figure 4, Figure 5 shows that as tilt increases, the maximum temperature (Tmax) decreases more rapidly at a wavelength of 400 nm than at a wavelength of 650 nm, and, as write time ($T_w$) increases, the maximum temperature (Tmax) decreases even at the same wavelength of 400 nm. However, at a wavelength of 650 nm, the maximum temperature is insensitive to changes in write time ($T_w$).

Accordingly, since beam intensity decreases rapidly and beam spot size increases at a wavelength of 400 nm with respect to tilt, desired length and width of a mark cannot be obtained when recording is performed in this condition, and therefore, power density ultimately decreases. In addition, when recording is performed on a disc, which requires high density, using a 400-nm wavelength laser beam, compensation of tilt is required as the required temperature for forming an amorphous mark decreases rapidly with respect to tilt as shown in Figures 4 and 5.

In the meantime, as a method of compensating for tilt from a disc manufacturing aspect, tilt margin can be extended by making the substrate thickness of a disc, which is currently 0.6mm, thinner using the equation 1 shown in the table. However, since a substrate thickness of a disc thinner than 0.6 mm causes problems in manufacturing aspect or in characteristic aspect, tilt compensation cannot be performed simply by manufacturing a substrate thinner than 0.6 mm. In addition, from a recording aspect, as the focal depth of the incidence beam becomes shallower, defocus margin becomes smaller, and therefore, a problem may occur in recording due to even a small degree of defocus. This will now be explained referring to Figures 6 and 7, showing beam intensity and spot size, respectively, with respect to defocus in red wavelength and blue wavelength.

Figure 6 illustrates changes in beam peak intensity with respect to defocus, and the abscissa represents defocus, while the ordinate shows normalized values of beam peak intensity. As defocus increases, incidence beam intensity decreases more rapidly at a wavelength of 400 nm and 0.65 NA than at a wavelength of 650 nm and 0.6 NA. When recording is performed in this condition, desired length and width of a mark cannot be recorded. In addition, as NA increases, beam intensity decreases even in the same wavelength.

Figure 7 illustrates changes in beam spot size with respect to defocus, and the abscissa represents defocus, while the ordinate shows spot size ratio. As defocus increases, spot size increases more at a wavelength of 400 nm than at a wavelength of 650 nm. As NA increases, spot size increases even for the same wavelength.

Therefore, like the effect of tilt, defocus, if it occurs, affects peak intensity and spot size, such that normal recording cannot be performed. In addition, simultaneous occurrence of defocus and tilt is a more serious problem. The beam shape, peak intensity, and spot size in the simultaneous occurrence of defocus and tilt are shown in Figures 8 and 9.

Figure 8 illustrates changes in beam profile when defocus and tilt occur at the same time. Curve 1 shows a normal-state beam shape; curve 2 shows the beam shape when defocus is 0.25μm; curve 3 shows the beam shape when defocus is 0.5μm; curve 4 shows the beam shape when tilt is 0.5°; curve 5 shows the beam shape when tilt is 0.5° and defocus is 0.25μm; and curve 6 shows the beam shape when tilt is 0.5° and defocus is 0.5μm.

Figure 9 illustrates changes in beam spot size and peak power intensity when defocus and tilt occur at the same time, and the abscissa shows a normal case 1, a case 2 where defocus is 0.25μm, a case 3 where defocus is 0.5μ, a case 4 where tilt is 0.5°, a case 5 where tilt is 0.5° and defocus is 0.25μm, and a case 6 where tilt is 0.5° and defocus is 0.5μm. The ordinate shows the normalized value of peak intensity when tilt and defocus occur for peak intensity in a normal state and the normalized value of spot size when tilt and defocus occur for spot size in a normal state. As defocus or tilt increases, peak power intensity decreases and spot size increases. Peak power intensity decreases more and spot size increases more in a case where tilt and defocus occur at the same time, than in a case where any one of defocus and tilt occurs.

As shown in Figures 8 and 9, a case where tilt and defocus occur at the same time has a more serious affect than a case where any one of tilt and defocus occurs. Accordingly the demand for compensation for tilt and/or defocus becomes greater.

US4631712 (Olympus) discloses an arrangement in which disk inclination is detected and a beam correction circuit corrects an intensity of light beam in accordance with the detected inclination.

US4710908 (Olympus) discloses apparatus for compensating for disk warp and surface deflections. Focus error signals are memorized and used to develop control signals for moving a focusing lens vertically as well as to develop light intensity correction values.

With a view to solve or reduce the above problems, it is an aim of embodiments of the present invention to provide a method of compensating for tilt in which recording is performed by adjusting power and/or time used for recording with respect to the tilt of an optical recording medium.

It is another aim to provide a method of adaptively compensating for a write pulse with respect to the detected tilt of an optical recording medium.

It is another aim to provide an apparatus for compensating for tilt in which recording is performed by adjusting the power and/or time used for recording with respect to tilt of an optical recording medium.

According to the present invention there is provided an apparatus and method as set forth in the appended claims. Preferred features of the invention will be apparent from the dependent claims and the description which follows.

For a better understanding of the invention, and to show how embodiments of the same may be carried into effect, reference will now be made, by way of example, to the accompanying diagrammatic drawings in which:

Figure 1 illustrates coma aberration with respect to wavelength and numerical aperture (NA);

Figure 2 illustrates changes in peak intensity with respect to tilt;

Figure 3 illustrates changes in spot size with respect to tilt;

Figure 4 illustrates changes in a maximum temperature-to-write power ratio with respect to tilt;

Figure 5 illustrates changes in a maximum temperature-to write time ratio with respect to tilt;

Figure 6 illustrates changes in peak intensity with respect to defocus;

Figure 7 illustrates changes in spot size with respect to defocus;

Figure 8 illustrates changes in beam profile when defocus and tilt occur at the same time;

Figure 9 illustrates changes in beam spot size and peak intensity when defocus and tilt occur at the same time;

Figure 10 illustrates changes in the recording mark length-to-write power ratio with respect to tilt;

Figure 11 illustrates changes the recording mark width-to-write power ratio with respect to tilt;

Figure 12A is a table showing changes in the maximum temperature, the length of a recording mark, and the width of a recording mark for each write power with respect to tilt when wavelength is 650 nm, and Figure 12B is a table (b) for the same when wavelength is 400 nm;

Figure 13 illustrates changes in the recording mark length-to-write time ratio with respect to tilt;

Figure 14 illustrates changes in the recording mark width-to-write time ratio with respect to tilt;

Figure 15A is a table showing changes in the maximum temperature, the length of a recording mark, and the width of a recording mark for each write time with respect to tilt when wavelength is 650 nm, and Figure 15B is a table showing the same when wavelength is 400 nm;

Figure 16 illustrates the compensation effect of write power when defocus is 0.25μm and 0.5μm;

Figure 17 illustrates compensation write powers with respect to defocus;

Figure 18 is a table showing changes in the shift amount of a write pulse, the length of a recording mark and the width of a recording mark for each write power with respect to tilt/defocus;

Figure 19 illustrates the compensation effect of write power when tilt is 0.5°, and when tilt is 0.5° and defocus is 0.25μm.

Figure 20 illustrates the compensation effect with respect to write power and write time when tilt is 0.5°;

Figure 21 illustrates in an upper portion non return to zero (NRZI) input data and, in a lower portion corresponding recording patterns of write pulse used in tilt and/or defocus compensation according to embodiments of the present invention;

Figure 22 is a table showing changes in the shift amount of a recording pulse, the length of a recording mark and the width of a recording mark for each write power with respect to tilt;

Figure 23 illustrates the compensation effect of the length of a recording mark and width of a recording mark by write power when tilt is 0.5°;

Figure 24 illustrates the compensation effect of the length of a recording mark and width of a recording mark with respect to changes in write power and write time when tilt is 0.5°;

Figure 25 illustrates the recording compensation effect when defocus is 1μm in a 2.6GB digital versatile disc-random access memory (DVD-RAM);

Figure 26 illustrates the recording compensation effect when tilt is 1.0°in a 2.6GB DVD-RAM;

Figure 27 illustrates change in jitters with respect to the recording compensation effect when tilt is 1.0°in a 2.6GB DVD-RAM;

Figure 28 is a flowchart of a tilt compensation method according to an embodiment of the present invention;

Figure 29 is a flowchart of a tilt and defocus compensation method according to another embodiment of the present invention;

Figure 30 is a block diagram of a tilt compensation apparatus according to an embodiment of the present invention; and

Figure 31 is a block diagram of a tilt and defocus compensation apparatus according to another embodiment of the present invention.

Hereinafter, embodiments of the present invention will be described in detail with reference to the attached drawings. The present invention is not restricted to the following embodiments, and many variations are possible within the scope of the present invention. The embodiments of the present invention are provided in order to more completely explain the present invention to anyone skilled in the art.

First, as explained in Figure 2, when tilt occurs, the incidence beam peak intensity rapidly decreases when the wavelength is 400 nm. Therefore, compensation of write power is needed and compensation of erase power is also needed to a degree.

In addition, as explained in Figure 3, the increase in beam spot size with respect to tilt is slow at a wavelength of 650 nm, but the increase is rapid at a wavelength of 400 nm. For example, referring to Figure 3, the spot size occurring at a wavelength of 650 nm and a tilt of 1° occurs at a tilt of 0.3°tilt when the wavelength is 400 nm and the NA is 0.75. Therefore, at 400 nm, beam peak intensity decreases and beam spot size increases, which causes the effect of a reduction in power density.

Figures 4 and 5 show that a decrease in the maximum temperature with respect to tilt is more rapid at a wavelength of 400 nm than at a wavelength of 650 nm. This result shows that in recording in the same tilt, energy reduction required for forming a mark is prominent at a wavelength of 400 nm.

Next, Figures 10 and 11 show changes with respect to tilt by measuring the length and width of marks in order to compare mark shapes with respect to write power at a wavelength of 650 nm and at a wavelength of 400 nm, respectively. The figures show changes in length (L) and width (W) of recording mark with respect to write power ($P_w$) at a wavelength of 650 nm and at a wavelength of 400 nm when tilt occurs at a tilt of 0°.

Figure 10 illustrates the change in recording mark length-to-write power ratio with respect to tilt, and the abscissa represents tilt, while the ordinate shows the normalized value of recording mark length (L) with respect to tilt for a tilt of 0° ($L_{tilt}/L_{tilt=0}$). Figure 10 shows that as tilt increases, the length of a recording mark (L) decreases more at the wavelength of 400 nm than at the wavelength of 650 nm, and as write power ($P_w$) decreases, the length of the recording mark (L) decreases even at the same wavelength of 400 nm.

Figure 11 illustrates changes in recording mark width-to-write power ratio with respect to tilt, and the abscissa represents tilt, while the ordinate shows the normalized value of recording mark width (W) with respect to tilt for a tilt of 0° ($W_{tilt}/W_{tilt=0}$). Figure 11 shows that as tilt increases, the width of recording mark (W) decreases more at a wavelength of 400 nm than at a wavelength of 650 nm, and as write power ($P_w$) decreases, the width of the recording mark (W) decreases even at the same wavelength of 400 nm.

Therefore, the results in Figures 10 and 11 show that the decrease in the length of a recording mark is greater than that in the width of a recording mark and the decrease at a wavelength of 400 nm is greater than that at a wavelength of 650 nm when the shape of a recording mark changes with respect to tilt.

For example, the results in Figures 10 and 11 show that when the wavelength is 400 nm and tilt is 0.6°, recording with a write power of 5 mW to 7 mW causes a decrease in the length of a recording mark by about 72% to 88% and a decrease in the width of a recording mark by about 55% to 75%. That is, the results show that the size of a recording mark is compensated for with respect to the compensation of write power. Therefore, if a writing strategy which controls the recording waveform to a multi-waveform is more utilized for recording data applied to an optical disc system and compensation is performed by using additional erase power and additional write power, tilt can be reduced to a value which is close to zero.

Figures 12A and 12B show tables of changes in the maximum temperature, and in the length and the width of a recording mark for each write power with respect to tilt. Table shown in Figure 12A shows the changes when the wavelength is 650 nm, and table shown in Figure 12B shows the changes when the wavelength is 400 nm.

Meanwhile, based on detected tilt, compensation can be performed using write time. For example, a recording mark can be compensated for in the length direction by adjusting write time. Therefore, by appropriately adjusting the power level and recording time, compensation is performed with respect to the amount of tilt, so that a mark with desired length and width can be recorded.

Figure 13 shows changes in the recording mark length for different write times ($T_w$) with respect to tilt. Here, the abscissa represents tilt, while the ordinate shows the normalized value of the length of a recording mark with respect to tilt for a tilt of 0° ($L_{tilt}/L_{tilt=0}$). The figure shows that as tilt increases, the length of a recording mark decreases more at a wavelength of 400 nm than at a wavelength of 650 nm, and that, as write time ($T_w$) decreases, the length of a recording mark (L) decreases even at the same wavelength of 400 nm.

Figure 14 shows changes in the recording mark width for different write times ($T_w$) with respect to tilt. Here, the abscissa represents tilt, while the ordinate shows the normalized value of the width of a recording mark with respect to tilt for a tilt of 0° ($W_{tilt}/W_{tilt=0}$). The figure shows that as tilt increases, the width of a recording mark decreases more at a wavelength of 400 nm than at a wavelength of 650 nm, and that, as write time ($T_w$) decreases, the width of a recording mark (L) decreases even at the same wavelength of 400 nm.

Figures 15A and 15B show tables of changes in the maximum temperature, and in the length and the width of a recording mark for each write time ($T_w$) with respect to tilt. Table shown in Figure 15A shows the changes when the wavelength is 650 nm, and table shown in Figure 15B shows the changes when the wavelength is 400 nm.

Meanwhile, as described referring to Figure 6, when tilt/defocus occurs, the peak intensity of incidence beam at a wavelength of 400 nm decreases rapidly, and therefore, compensation of write power is required. In addition, as described referring to Figure 7, the increase in beam spot size is insensitive to tilt/defocus at a wavelength of 650 nm, while the beam spot size decreases rapidly at a wavelength of 400 nm with respect to tilt/defocus. Figure 9 shows that such a result is more prominent when defocus and tilt occur together. Therefore, if defocus occurs, beam peak intensity decreases and beam spot size increases, so that power density decreases. This is the same result as that produced by the occurrence of tilt.

This defocus effect of the incident beam is shown in Figure 16, which illustrates changes in defocus with respect to the shape of mark (the length and width of a mark) for each write power when wavelengths 650 nm and 400 nm, respectively. The length and width of a recorded mark decrease as defocus increases, that is, as defocus increases from 0.25μm to 0.5μm, compared to a normal state where write power is 6mW. When the decreased length and width of a mark due to defocus are compensated for by write power, the same shape as the normal-state mark can be obtained when defocus is 0.25μm and write power is 6.75mW, or when defocus is 0.5μm and write power is 8mW. Therefore, as shown in Figure 17, a desired recording mark, that is a recording mark without defocus, can be recorded by using an amount of write power which compensates for the defocus.

Figure 18 is a table showing the result of measuring the amount of shift of a recording location, and the length of a recording mark and width of a recording mark when tilt is zero, when tilt is 0.5°, and when tilt is 0.5°and defocus is 0.25μm. Each value is obtained by increasing write power from the 6mW normal write power in steps of 1mW. When tilt is zero, a write power higher than 6mW is of no use, because the optimum write power is 6mW. When tilt is 0.5°, a write power higher than 8mW is of no use.

Figure 19 illustrates changes in the length and width of a recording mark with respect to write power when tilt is 0.5°, and when tilt is 0.5° and defocus is 0.25μm, based on the results in Figure 18. The figure shows that the difference (_1) between write power required for obtaining the width of a normal-state mark and write power required for obtaining the length of a normal-state mark when tilt is 0.5°, is almost the same as the difference (_2) between write power required for obtaining the width of a normal-state mark and write power required for obtaining the length of a normal-state mark when tilt is 0.5° and defocus is 0.25μm.

Figure 20 illustrates the compensation effect by write time as well as write power when only tilt occurs (when tilt is 0.5°) based on the result in Figure 19. The figure shows that compensation can be effectively performed when compensation of the length of a mark is adjusted by write power and compensation of the width of a mark is adjusted by write time. In particular, even when compensation of the width of a mark is performed, the compensation is performed, using the ending time of the first pulse ($T_{EFP}$) and/or the starting time of the last pulse ($T_{SLP}$) of recording pattern shown in Figure 21B. When tilt is compensated for only using write power, the length of a mark is adjusted by write power, as described above, and the width of a mark can be compensated for by adjusting write power of a multi-pulse chain located between the first pulse and the last pulse.

Meanwhile, for non return to zero (NRZI) input data, as shown in an upper portion of Figure 21, write pulses as shown in a lower portion of Figure 21 are generated and then recorded on a disc.

Here, this NRZI data includes marks and spaces, and during spaces, the laser diode is off. When a disc is a digital versatile disc (DVD), each mark of NRZI data having the length of 3T, 4T, ..., 14T (here, T is 1-bit length) is recorded only by changing the number of multi-pulses without changing the first pulse, the last pulse and a cooling pulse.

That is, the recording pattern according to a DVD specification includes the first pulse, a multi-pulse chain and the last pulse. The first rising edge of the first pulse of basic recording pulses occurs a predetermined time after the rising edge of a recording mark. The rising edge of the first pulse can be shifted before and after in units of 1 nanosecond (ns). The rising edge of the last pulse can be shifted also before and after in units of 1ns. A multi-pulse chain is divided into a plurality of short pulses to reduce accumulation of a heat at the latter part of a recording mark in order to prevent the occurrence of deformation in a recording mark.

Numeral 1 of Figure 21 is the starting time of the first pulse ($T_{SFP}$), numeral 2 is the ending time of the first pulse ($T_{EFP}$), numeral 3 is the starting time of the last pulse ($T_{SLP}$), numeral 4 is the ending time of the last pulse ($T_{ELP}$), and numeral 5 is a cooling pulse period ($T_{LC}$). Also, $P_w$ is write power (also referred to as peak write power), $P_r$ is read power, and $P_b$ is bias power (also referred to as erase power).

Therefore, when NRZI input data as shown in the upper part of Figure 21 are recorded as marks and spaces on a disc using a recording signal having the recording pattern shown in the lower portion of Figure 21, the starting point of a recorded mark is shifted by beam shift due to tilt. To compensate for this, the recording pattern must be shifted with respect to tilt.

Figure 22 shows changes in the recording pattern shown in Figure 21 with respect to tilt, that is, changes in the recording location, the shift amount, the length and the width of a mark with respect to tilt and write power. The figure shows that as tilt increases, the amount by which the recording location of a mark is shifted increases and the length and the width of a mark decrease. In addition, as write power increases for the same tilt, the amount by which the recording location of a mark is shifted decreases and the length and the width of a mark increase. As shown in Figure 22, when tilt is zero, a write power higher than 6mW is of no use, because the optimum write power is 6mW. When tilt is 0.5°, a write power higher than 8mW is of no use. When tilt is 1.0°, recording cannot be performed with a write power of 6mW or 7mW.

Figure 23 shows the compensation effect of a recording pattern (the length and the width of a mark) by write power when tilt is 0.5°, based on the result in Figure 22.

The abscissa represents write power ($P_w$), while the ordinate shows the normalized value ($L, W_{pw,\ tilt=0.5}/L, W_{pw=6,\ tilt=0}$) of the length and the width of a recording mark with respect to write power when tilt is 5°, for write power of 6mW and a tilt of 0°.

Figure 23 shows that when tilt occurs (when tilt is 5°), the length and the width of a mark increase as write power increases, and the length of a mark is effectively compensated for with write power. For example, when write power is 6mW, the length of a mark corresponds to 85% of the normal value and the width of a mark corresponds to 75% of the normal value. Therefore, in the same write power, compensating the length of a mark is more effective than compensating the width of a mark.

Figure 24 illustrates the compensation effect of the recording pattern by write time as well as write power when tilt is 0.5°, based on the result in Figure 23. The figure shows that compensation for the length of a mark can be effectively adjusted by write power and compensation for the width of a mark can be effectively adjusted by write time. In particular, even when compensation of the width of a mark is performed, the compensation is performed using the ending time of the first pulse ($T_{EFP}$) and/or the starting time of the last pulse ($T_{SLP}$) of the recording pattern shown in Figure 21B. When tilt is compensated only by adjusting the write power, the width of a mark can be compensated by adjusting the write power of the multi-pulses located between the first pulse and the last pulse.

Compensation can be adaptively performed based on detected tilt, by storing in advance write power and/or write time, etc., for compensating for the shift amount of the recording pattern, and the length and the width of a mark with respect to tilt based on the result in Figure 22, in a memory. In addition, in the memory, write power and/or write time, etc., for compensating for the shift amount of the recording pattern, and the length and the width of a mark according to the recording pattern (the length of a mark) of input data as well as tilt, can be stored.

Figure 25 is the result of an experiment for compensation by write power with respect to detected defocus using 2.6GB DVD-RAM, and shows the same tendency as the result of simulation in Figure 16. The abscissa represents write power, while the ordinate represents the relative length and width of a mark. The power of a 2.6GB DVD-RAM in a normal state is 12mW(=write power), 3.0mW(=bias power), 5.5mW(=read power), and when 0.1μm defocus occurs,

the length and the width of a mark are compensated for by an increase in write power.

Figure 26 shows changes in the length and the width of a recording mark with respect to compensation by write power when a tilt of 1°occurs, using the same disc (2.6GB DVD-RAM) as the disc in Figure 25. The abscissa represents write power, while the ordinate represents the relative length and width of a mark. The figure shows that when tilt occurs, the length and the width of a mark are compensated for controlling write power.

Figure 27 shows the change in jitter with respect to power when tilt does not occur, and the change when a tilt of 1°occurs. The abscissa represents write power, while the ordinate represents jitter amount. In a normal state where tilt does not occur, jitter hardly occurs even though write power increases. But, when tilt occurs, jitter amount decreases as write power increases.

In conclusion, when only defocus occurs, it can be compensated for by only adjusting write power. However, when defocus and tilt occur together, the shift of beam by tilt is compensated for by shifting the entire recording pattern, the length of a mark is compensated for by adjusting write power, and the width of a mark is compensated for by adjusting write time, and particularly by the ending time of the first pulse ($T_{EFP}$) and/or the starting time of the last pulse ($T_{SLP}$) in the recording pattern. In addition, when defocus and tilt are compensated for only by adjusting write power, the length of a mark is adjusted by write power, the width of a mark can be adjusted by write power of multi-pulses located between the first pulse and the last pulse.

Figure 28 is a flowchart of a method of compensating for tilt according to an embodiment of the present invention. In step S101, tilt is detected, and in step S102, it is determined whether or not tilt is zero (tilt=0°). In step S102, it can be determined whether or not tilt is α° by considering the margin of tilt (α°).

In step S103, when detected tilt is not zero, the recording pattern of the write pulse is shifted in the direction for compensating for tilt. The length and the width of a recording mark are compensated for so that tilt is reduced down close to zero in step S104.

That is, compensation for the length of a mark is adjusted by write power, and compensation of the width of a mark is adjusted by write time, and particularly by the ending time of the first pulse ($T_{EFP}$) and/or the starting time of the last pulse ($T_{SLP}$) in the recording pattern. In addition, when tilt is compensated for only by adjusting write power, the length of a mark is adjusted by write power, the width of a mark can be adjusted by write power of multi-pulses located between the first pulse and the last pulse.

In step S105, when tilt is zero in step S102, recording is performed by maintaining the power and write time required for recording, which are supplied to a laser diode, and when tilt is not zero in step S102, recording is performed by applying to a laser diode a write pulse, which has power and/or write time required for recording with respect to detected tilt supplied in the step S104.

Here, in steps S103 and S104, the required shift amount, write power and/or write time can be adaptively compensated for respect to detected tilt, by using a memory storing write power and/or write time for compensating for the shift amount of the recording pattern, and the length and the width of a mark with respect to tilt or the length of a mark in input data.

Figure 29 is a flowchart of a method of compensating for tilt and defocus according to another embodiment of the present invention. In step S201, tilt and/or defocus is detected, and in step S202, it is determined whether or not detected defocus is equal to or less than a predetermined margin (αμm).

When the result in step S202 indicates that detected defocus is greater than a predetermined margin (αμm), write power is adjusted with respect to the detected defocus in step S203, and when the result in step S202 indicates that detected defocus is equal to or less than a predetermined margic (αμm), it is determined in step S204 whether or not detected tilt in step S201 is equal to or less than a predetermined margin (β°) is determined in step S204.

When the result in step S204 indicates that tilt is greater than a predetermined margin (β°), the recording pattern of a write pulse is shifted in a direction which is opposite to the direction shifted due to tilt, with respect to detected tilt in step S205, and the length and the width of a recording mark is compensated for so that tilt is reduced down close to zero in step S206. In step 206, compensation of the length of a mark is adjusted by write power, and compensation of the width of a mark is adjusted by write time, and particularly by the ending time of the first pulse ($T_{EFP}$) and/or the starting time of the last pulse ($T_{SLP}$) in the recording pattern. In addition, when tilt is compensated for only by adjusting write power, the length of a mark is adjusted by write power as described above, the width of a mark can be adjusted by the write power of multi-pulses located between the first pulse and the last pulse.

In step S207, when defocus is equal to or less than a predetermined margin (aum) and tilt is equal to or less than a predetermined margin (β°), recording is performed by maintaining the power and write time required for recording, which are supplied to a laser diode, and otherwise, recording is performed by applying to a laser diode a write pulse, which has write power having write power with respect to defocus detected in step S203, or by applying to a laser diode a write pulse, which has power and/or time required for recording compensated with respect to detected tilt in step S206.

Here, write power for compensation with respect to defocus in step S203 and the required shift amount, write power and/or write time in steps S205 and S206 can be adaptively compensated for with respect to detected tilt and/or defocus, by using a memory storing write power and/or write time for compensating for the shift amount of the recording pattern, and the length and the width of a mark with respect to tilt or the length of a mark in input data. In addition, power and/or time, and the amount of shift required for recording which correspond to a case where defocus and tilt occur together, and a case where defocus or tilt occurs, respectively, can be stored.

Figure 30 is a block diagram of an apparatus for compensating for tilt according to an embodiment of the present invention. Reference numeral 102 is an optical disc, reference numeral 104 is a pick-up unit, reference numeral 106 is a reproduction signal detector, reference numeral 108 is a tilt detector, reference numeral 110 is a recording compensator, and reference numeral 112 is a laser diode (LD) driver.

In Figure 30, the pick-up unit 104, which drives an optical disc 102, includes such mechanisms as an optical system, which includes an object lens 1, a half mirror 2, a collimator lens 3, a photo detector (PD), which detects an optical signal reflected from the disc 102 after dividing the signal, an LD, and, though not shown in the figure, an actuator for focusing and tracking.

It is preferable that the laser diode wavelength of the pick-up unit 104 is equal to or less than approximately 430 nm (blue wavelength), that when the thickness of a disc substrate is equal to or greater than 0.3mm, the NA of an object lens is equal to or greater than 0.6, and that when the thickness of a disc substrate is equal to or less than 0.3mm, the NA of an object lens is equal to or greater than 0.7.

The reproduction signal detector 106 detects a reproduction signal in the output signal of the PD. The tilt detector 108 detects tilt of an optical disc 102, using the reproduction signal supplied by the reproduction signal detector 106 or the output signal of the PD. The tilt detector 108 can be used only for detecting in tangential tilt.

The recording compensator 110 generates a recording pulse earlier to compensate for the amount of shift due to tilt, which is detected by the tilt detector 108, in order to shift the starting point of a recording mark in the direction in which tilt is compensated. In addition, compensation of the length of a mark is adjusted by write power and compensation of the width of a mark is adjusted by write time. Here, the width of a mark is compensated for by using the ending time of the first pulse ($T_{EFP}$) and/or the starting time of the last pulse ($T_{SLP}$) of the recording pattern. In addition, when tilt is compensated for only using write power, the length of a mark is adjusted by write power, as described above, and the width of a mark can be compensated for by adjusting write power of multi-pulses located between the first pulse and the last pulse.

In addition, the recording compensator 110 can adaptively compensate for tilt detected in the tilt detector 106, by integrating a memory storing write power and/or write time for compensating for the shift amount of the recording pattern, and the length and the width of a mark with respect to tilt. Also, write power and/or write time, etc., for compensating for the shift amount of the recording pattern, and the length and the width of a mark with respect to the length of a mark of input data as well as tilt can be stored.

The LD driver 112 performs recording on the optical disc 102 by the pick-up unit 104, by converting a write pulse signal into a current signal and making the current signal flow through the LD during write time, with respect to the power level of write pulse adjusted in the recording compensator 110. That is, when the laser diode is continuously turned on or off, heat is transferred to the optical disc and recording data is recorded as a recording mark.

Figure 31 is a block diagram of an apparatus for compensating for tilt and defocus according to another embodiment of the present invention. Reference numeral 202 is an optical disc, reference numeral 204 is a pick-up unit, reference numeral 206 is a reproduction signal detector, reference number 208 is a defocus/tilt detector, reference numeral 210 is a recording compensator, and reference numeral 212 is a laser diode (LD) driver.

In Figure 31, the pick-up unit 204, which drives an optical disc 202, includes such mechanisms as an optical system, which includes an objective lens 11, a half mirror 12, a collimator lens 13, a photo detector (PD), which detects an optical signal reflected from the disc 202 after dividing the signal, a laser diode (LD), and, though not shown in the figure, an actuator for focusing and tracking.

It is preferable that the laser diode wavelength of the pick-up unit 204 is equal to or less than approximately 430 nm (blue wavelength), and that when the thickness of a disc substrate is equal to or greater than 0.3mm, the NA of an object lens is equal to or greater than 0.6, and that when the thickness of a disc substrate is equal to or less than 0.3mm, the NA of an object lens is equal to or greater than 0.7.

The reproduction signal detector 206 detects a reproduction signal in the output signal of the PD. The defocus/tilt detector 208 detects defocus/disc tilt, using the reproduction signal supplied by the reproduction signal detector 206 or the output signal of the PD. The tilt detector 208 can be used only for detecting tilt in tangential.

The recording compensator 210 generates write pulse, which compensates write power due to detected defocus, when defocus is detected in the defocus/tilt detector 208, and generates a recording pulse earlier to compensate for the amount of shift due to the detected tilt, in order to shift the starting point of a recording mark when tilt is detected. Here, compensation of the length of a mark is adjusted by write power and compensation of the width of a mark is adjusted by write time. Here, the width of a mark is compensated for by using the ending time of the first pulse ($T_{EFP}$) and/or the starting time of the last pulse ($T_{SLP}$) of the recording pattern. In addition, when tilt is compensated for only using write power, the length of a mark is adjusted by write power, as described above, and the width of a mark can be compensated for by adjusting write power of multi-pulses located between the first pulse and the last pulse.

In addition, the recording compensator 210 can adaptively compensate for tilt and/or defocus detected in the defocus/tilt detector 206, by integrating a memory storing compensation write power with respect to defocus, and write power and/or write time for compensating the shift amount of the recording pattern, and the length and the width of a mark with respect to tilt or the length of a mark in input data.

The LD driver 212 performs recording on the optical disc 202 by the pick-up unit 204, by converting a write pulse signal into a current signal and making the current flow through the LD during write time, with respect to the power level of the write pulse adjusted in the recording compensator 210. That is, when the laser diode is continuously turned on or off, heat is transferred to the optical disc and recording data is recorded as a recording mark.

According to embodiments of the present invention, the power (write power, erase power, etc.) level required for recording must be increased by a predetermined degree with respect to detected tilt and/or defocus. Also write time is adjusted. As a result, a temperature similar to that in a case, where tilt and/or defocus do not occur, can be obtained, and therefore, the desired size (length, width) of a mark can be recorded.

As described above, according to embodiments of the present invention, since recording is compensated by adjusting the power level and/or recording time required for recording with respect to detected tilt and/or defocus, a mark having a desired size (length, width) can be recorded, and therefore, the present invention is appropriate for a high-density optical system.

## Claims

1. A method of compensating for tilt of an optical recording medium, the method comprising the steps of:

    (a) detecting the tilt of the optical recording medium; and

    (b) compensating a recording signal having a predetermined recording pattern using a predetermined scheme with respect to the detected tilt, the method being **characterized in that** the step (b) comprises the sub-steps of:

        (b1) shifting the starting point of the recording pattern by changing the timing of generation of a recording pulse in accordance with the detected tilt; and

        (b2) adjusting power and/or time required for recording with respect to the detected tilt in order to compensate the size of a recording mark formed by the recording signal.

2. The method of claim 1, wherein the predetermined scheme adjusts an optical power level required for recording the recording signal.

3. The method of claim 1 or 2, wherein the predetermined scheme adjusts time required for recording the recording signal.

4. The method of claim 1, wherein in the step (b), the length of the mark is compensated by adjusting the write power, and the width of the mark is compensated by adjusting the write time.

5. The method of claim 4, wherein the recording signal has a recording pattern comprising a number of pulses in a multi-pulse signal and the width of the mark is compensated by adjusting the ending time of a first pulse and/or the starting time of a last pulse of the multi-pulse signal.

6. The method of claim 1, wherein marks and spaces are recorded on the optical recording medium by means of the recording signal having the predetermined recording pattern in which each mark on the optical recording medium is formed by a multi-pulse chain and wherein the method comprises using a memory for storing power and/or time values required for recording by means of which the length and the width of a mark are compensated with respect to detected tilt.

7. The method of claim 1 wherein defocus of an optical recording medium is additionally compensated by detecting defocus of the optical recording medium and compensating the recording signal by a predetermined scheme with respect to the detected defocus.

8. The method of claim 7, wherein compensating the recording signal in accordance with the detected tilt in step (b1) comprises shifting the starting point of the recording pattern by an amount equal to the amount by which the recording pattern was shifted due to tilt, said shifting being carried out in a direction which is opposite to the direction caused by the detected tilt.

**9.** The method of claim 8, wherein the predetermined scheme adjusts the level of optical power with respect to the detected defocus.

**10.** The method of claim 8 or 9, wherein in the step (b2), the length of the mark is compensated by adjusting write power, and the width of the mark is compensated by adjusting write time.

**11.** The method of claim 10, wherein the length of the mark is compensated by adjusting write power, and the width of the mark is compensated by adjusting the ending time of a first pulse or the starting time of a last pulse of the recording pattern.

**12.** The method of claim 8, wherein in the step (b2), the length of the mark is compensated by adjusting write power, and the width of the mark is compensated by adjusting write power of a multi-pulse chain of the recording pattern.

**13.** An apparatus for compensating for tilt which records and/or reproduces information on an optical recording medium, the apparatus comprising:

a tilt detector (108) for detecting the tilt of an optical recording medium (102); and

a recording compensator (112) for compensating a recording signal in which each mark on the optical medium is recorded using a predetermined recording pattern, wherein the apparatus is **characterized in that** the recording compensator (112) is arranged to shift the starting point of the recording pattern by changing the timing of generation of a recording pulse with respect to tilt detected by the tilt detector (108) and to compensate the length and width of a mark by means of adjusting the power of the recording signal and the time taken for recording.

**14.** The apparatus for compensating for tilt of claim 13, wherein the length of the mark is compensated for by adjusting power of the recording signal, and the width of the mark is compensated for by adjusting by time required for recording.

**15.** The apparatus for compensating for tilt of claim 13, wherein the length of the mark is compensated for by adjusting power of the recording signal, and wherein the recording pattern of the recording signal comprises a multi-pulse chain for the formation of each mark on the optical recording medium, wherein the width of a mark to be compensated is controlled by adjusting the ending time of a first pulse/the starting pulse of the last pulse in the multi-pulse chain.

**16.** The apparatus for compensating for tilt of claim 13, wherein the length of the mark is compensated for by adjusting power of the recording signal, and wherein the recording pattern of the recording signal comprises a multi-pulse chain for the formation of each mark on the optical recording medium, wherein the width of a mark to be compensated is controlled by adjusting the power of the multi-pulse chain.

**17.** The apparatus of claim 13, wherein marks and spaces are recorded on the optical recording medium by means of the recording signal in which each mark on the optical recording medium is formed by a multi-pulse chain and wherein the apparatus further comprises: a memory arranged for storing power and/or time values required for recording by means of which the length and the width of a mark are compensated with respect to detected tilt.

**18.** The apparatus of claim 13, wherein defocus is additionally compensated for, the apparatus further comprising:

a defocus detector (208) for detecting the defocus of the optical recording medium (202); and

the recording compensator (210) compensates the recording signal with respect to tilt and defocus detected by the tilt and defocus detectors, wherein power of the recording signal is adjusted with respect to detected defocus, and the recording compensator (210) is arranged to generate the recording pattern earlier to compensate for the amount of shift with respect to detected tilt, and the length and the width of a mark are compensated by respectively adjusting the power of the recording signal and/or the time during which the recording signal is generated.

**19.** The apparatus of claim 18, wherein the length of a mark is compensated for by adjusting power of the recording signal, and the width of a mark is compensated for by adjusting time required for recording.

**20.** The apparatus of claim 19, wherein the recording pattern for recording each mark on the optical recording medium comprises a multi-pulse chain and the width of a mark is compensated for by adjusting the ending time of the first pulse/the starting time of the last pulse of the multi-pulse chain.

**21.** The apparatus of claim 18, wherein the recording pattern for recording each mark on the optical recording medium comprises a multi-pulse chain and the width of a mark is compensated for by adjusting power of the multi-pulse chain.

**22.** The apparatus of claim 13, wherein tilt and defocus of an optical recording medium are compensated for, and wherein marks and spaces are recorded by means of the recording signal and in which each recorded mark is recorded using a multi-pulse chain of write pulses, the apparatus further comprising:

a defocus detector (208) for detecting the defocus of an optical recording medium (202); and

a memory for storing compensation write power with respect to defocus, and power and/or time values required for recording in order to compensate for the amount of shift of the recording pattern, and the length and the width of a mark with respect to tilt/the length of a mark.

**23.** The apparatus of claim 22, wherein in the memory, power and/or time values, and the amount of shift required for recording, which correspond to a case where defocus and tilt occur together, and a case where defocus or tilt occurs, respectively, are stored.

**Patentansprüche**

**1.** Verfahren zur Kompensation von Neigung eines optischen Aufzeichnungsmediums, wobei das Verfahren die folgenden Schritte umfasst:

(a) Erfassen der Neigung des optischen Aufzeichnungsmediums; und

(b) Kompensieren eines Aufzeichnungssignals mit einem vorgegebenen Aufzeichnungsmuster unter Verwendung einer vorgegebenen Methode in Bezug auf die erfasste Neigung, wobei das Verfahren **dadurch gekennzeichnet ist, dass** der Schritt (b) die folgenden Teilschritte umfasst:

(b1) Verschieben des Anfangspunktes des Aufzeichnungsmusters durch Verändern des Zeitablaufs der Erzeugung eines Aufzeichnungsimpulses entsprechend der erfassten Neigung; und

(b2) Regulieren von Energie und/oder Zeit, die zum Aufzeichnen erforderlich sind, in Bezug auf die erfasste Neigung, um die Größe eines Aufzeichnungszeichens zu kompensieren, das durch das Aufzeichnungssignal ausgebildet wird.

**2.** Verfahren nach Anspruch 1, wobei die vorgegebene Methode einen optischen Energiepegel reguliert, der zum Aufzeichnen des Aufzeichnungssignals erforderlich ist.

**3.** Verfahren nach Anspruch 1 oder 2, wobei die vorgegebene Methode die Zeit reguliert, die zum Aufzeichnen des Aufzeichnungssignals erforderlich ist.

**4.** Verfahren nach Anspruch 1, wobei in Schritt (b) die Länge des Zeichens kompensiert wird, indem die Schreibenergie reguliert wird, und die Breite des Zeichens kompensiert wird, indem die Schreibzeit reguliert wird.

**5.** Verfahren nach Anspruch 4, wobei das Aufzeichnungssignal ein Aufzeichnungsmuster hat, das eine Anzahl von Impulsen in einem Mehrfachimpulssignal umfasst, und die Breite des Zeichens kompensiert wird, indem die Endzeit eines ersten Impulses und/oder die Anfangszeit eines letzten Impulses des Mehrfachimpulssignals reguliert wird.

6. Verfahren nach Anspruch 1, wobei Zeichen und Zwischenräume auf dem optischen Aufzeichnungsmedium mittels des Aufzeichnungssignals aufgezeichnet werden, das das vorgegebene Aufzeichnungsmuster hat, indem jedes Zeichen auf dem optischen Aufzeichnungsmedium durch eine Mehrfachimpulsfolge ausgebildet wird, und wobei das Verfahren den Einsatz eines Speichers zum Speichern von Energie- und/oder Zeitwerten umfasst, die zum Aufzeichnen erforderlich sind und mittels derer die Länge und die Breite eines Zeichens in Bezug auf erfasste Neigung kompensiert werden.

7. Verfahren nach Anspruch 1, wobei Fokusfehler eines optischen Aufzeichnungsmediums zusätzlich kompensiert wird, indem Fokusfehler des optischen Aufzeichnungsmediums erfasst wird und das Aufzeichnungssignal mit einer vorgegebenen Methode in Bezug auf den erfassten Fokusfehler kompensiert wird.

8. Verfahren nach Anspruch 7, wobei Kompensation des Aufzeichnungssignals entsprechend der erfassten Neigung in Schritt (b1) Verschieben des Anfangspunktes des Aufzeichnungsmusters um einen Betrag umfasst, der dem Betrag entspricht, um dem das Aufzeichnungsmuster aufgrund von Neigung verschoben wurde, und das Verschieben in einer Richtung ausgeführt wird, die entgegengesetzt zu der Richtung ist, die durch die erfasste Neigung verursacht wird.

9. Verfahren nach Anspruch 8, wobei die vorgegebene Methode den Pegel der elektrischen Energie in Bezug auf den erfassten Fokusfehler reguliert.

10. Verfahren nach Anspruch 8 oder 9, wobei in Schritt (b2) die Länge des Zeichens kompensiert wird, indem die Schreibenergie reguliert wird, und die Breite des Zeichens kompensiert wird, indem die Schreibzeit reguliert wird.

11. Verfahren nach Anspruch 10, wobei die Länge des Zeichens kompensiert wird, indem die Schreibenergie reguliert wird, und die Breite des Zeichens kompensiert wird, indem die Endzeit eines ersten Impulses oder die Anfangszeit eines letzten Impulses des Aufzeichnungsmusters reguliert wird.

12. Verfahren nach Anspruch 8, wobei in dem Schritt (b2) die Länge des Zeichens kompensiert wird, indem die Schreibenergie reguliert wird, und die Breite des Zeichens kompensiert wird, indem die Schreibenergie einer Mehrfachimpulsfolge des Aufzeichnungsmusters reguliert wird.

13. Vorrichtung zum Kompensieren von Neigung, die Informationen auf einem optischen Aufzeichnungsmedium aufzeichnet und/oder wiedergibt, wobei die Vorrichtung umfasst:

    einen Neigungsdetektor (108), der die Neigung eines optischen Aufzeichnungsmediums (102) erfasst; und

    eine Aufzeichnungs-Kompensiereinrichtung (112), die ein Aufzeichnungssignal kompensiert, in dem jedes Zeichen auf dem optischen Medium unter Verwendung eines vorgegebenen Aufzeichnungsmusters aufgezeichnet wird, wobei die Vorrichtung **dadurch gekennzeichnet ist, dass** die Aufzeichnungs-Kompensationseinrichtung (112) so eingerichtet ist, dass sie den Anfangspunkt des Aufzeichnungsmusters verschiebt, indem sie den Zeitablauf der Erzeugung eines Aufzeichnungsimpulses in Bezug auf durch den Neigungsdetektor (108) erfasste Neigung verändert, und die Länge sowie die Breite eines Zeichens mittels Regulierung der Energie des Aufzeichnungssignals und der zum Aufzeichnen benötigten Zeit kompensiert.

14. Vorrichtung zum Kompensieren von Neigung nach Anspruch 13, wobei die Länge des Zeichens kompensiert wird, indem Energie des Aufzeichnungssignals reguliert wird, und die Breite des Zeichens kompensiert wird, indem die zum Aufzeichnen erforderliche Zeit reguliert wird.

15. Vorrichtung zum Kompensieren von Neigung nach Anspruch 13, wobei die Länge des Zeichens kompensiert wird, indem die Energie des Aufzeichnungssignals reguliert wird, und wobei das Aufzeichnungsmuster des Aufzeichnungssignals eine Mehrfachimpulsfolge für die Ausbildung jedes Zeichens auf dem optischen Aufzeichnungsmedium umfasst und die zu kompensierende Breite eines Zeichens gesteuert wird, indem die Endzeit eines ersten Impulses/der Anfangsimpuls des letzten Impulses in der Mehrfachimpulskette reguliert wird.

16. Vorrichtung zum Kompensieren von Neigung nach Anspruch 13, wobei die Länge des Zeichens kompensiert wird, indem die Energie des Aufzeichnungssignals reguliert wird, und wobei das Aufzeichnungsmuster des Aufzeichnungssignals eine Mehrfachimpulsfolge für die Ausbildung jedes Zeichens auf dem optischen Aufzeichnungsmedium umfasst und die zu kompensierende Breite eines Zeichens gesteuert wird, indem die Energie der Mehrfachimpulsfolge reguliert wird.

**17.** Vorrichtung nach Anspruch 13, wobei Zeichen und Zwischenräume auf dem optischen Aufzeichnungsmedium mittels des Aufzeichnungssignals aufgezeichnet werden, in dem jedes Zeichen auf dem optischen Aufzeichnungsmedium durch eine Mehrfachimpulsfolge ausgebildet wird, und wobei die Vorrichtung des Weiteren umfasst:

einen Speicher, der so eingerichtet ist, dass er Energie- und/oder Zeitwerte speichert, die zum Aufzeichnen erforderlich sind und mittels derer die Länge und die Breite eines Zeichens in Bezug auf erfasste Neigung kompensiert werden.

**18.** Vorrichtung nach Anspruch 13, wobei Fokusfehler zusätzlich kompensiert wird und die Vorrichtung des Weiteren umfasst:

einen Fokusfehler-Detektor (208), der den Fokusfehler des optischen Aufzeichnungsmediums (202) erfasst; und

wobei die Aufzeichnungs-Kompensiereinrichtung (210) das Aufzeichnungssignal in Bezug auf Neigung und Fokusfehler kompensiert, die durch den Neigungs- und den Fokusfehler erfasst werden, die Energie des Aufzeichnungssignals in Bezug auf den erfassten Fokusfehler reguliert wird und die Aufzeichnungs-Kompensiereinrichtung (210) so eingerichtet ist, dass sie das Aufzeichnungsmuster früher erzeugt, um den Betrag der Verschiebung in Bezug auf erfasste Neigung zu kompensieren, und die Länge bzw. die Breite eines Zeichens kompensiert werden, indem jeweils die Energie des Aufzeichnungssignals und/oder die Zeit reguliert wird, während der das Aufzeichnungssignal erzeugt wird.

**19.** Vorrichtung nach Anspruch 18, wobei die Länge eines Zeichens kompensiert wird, indem Energie des Aufzeichnungssignals reguliert wird, und die Breite eines Zeichens kompensiert wird, indem die Zeit reguliert wird, die zum Aufzeichnen erforderlich ist.

**20.** Vorrichtung nach Anspruch 19, wobei das Aufzeichnungsmuster zum Aufzeichnen jedes Zeichens auf dem optischen Aufzeichnungsmedium eine Mehrfachimpulsfolge umfasst und die Breite eines Zeichens kompensiert wird, indem die Endzeit des ersten Impulses/die Anfangszeit des letzten Impulses der Mehrfachimpulsfolge reguliert wird.

**21.** Vorrichtung nach Anspruch 18, wobei das Aufzeichnungsmuster zum Aufzeichnen jedes Zeichens auf dem optischen Aufzeichnungsmedium eine Mehrfachimpulsfolge umfasst und die Breite eines Zeichens kompensiert wird, indem Energie der Mehrfachimpulsfolge reguliert wird.

**22.** Vorrichtung nach Anspruch 13, wobei Neigung und Fokusfehler eines optischen Aufzeichnungsmediums kompensiert werden, und Zeichen sowie Zwischenräume mittels des Aufzeichnungssignals aufgezeichnet werden und bei der jedes aufgezeichnete Zeichen unter Verwendung einer Mehrfachimpulsfolge von Schreibimpulsen aufgezeichnet wird, und die Vorrichtung des Weiteren umfasst:

einen Fokusfehler-Detektor (208), der den Fokusfehler eines optischen Aufzeichnungsmediums (202) erfasst; und
einen Speicher zum Speichern von Kompensations-Schreibenergie in Bezug auf Fokusfehler, und Energie- und/oder Zeitwerten, die zum Aufzeichnen erforderlich sind, um den Betrag der Verschiebung des Aufzeichnungsmusters und die Länge sowie die Breite eines Zeichens in Bezug auf Neigung/die Länge eines Zeichens zu kompensieren.

**23.** Vorrichtung nach Anspruch 22, wobei in dem Speicher Energie- und/oder Zeitwerte und der Betrag der Verschiebung, der zum Aufzeichnen erforderlich ist, die einem Fall, in dem Fokusfehler und Neigung zusammen auftreten, bzw. einem Fall entsprechen, in dem Fokusfehler oder Neigung auftritt, gespeichert sind.

## Revendications

1. Procédé de compensation d'inclinaison d'un support d'enregistrement optique, le procédé comportant les étapes consistant à :

    (a) détecter l'inclinaison du support d'enregistrement optique, et
    (b) compenser un signal d'enregistrement ayant un motif d'enregistrement prédéterminé en utilisant un schéma prédéterminé par rapport à l'inclinaison détectée, le procédé étant **caractérisé en ce que** l'étape (b) comporte les sous-étapes consistant à :

        (b1) décaler le point de départ du motif d'enregistrement en changeant la synchronisation de génération d'une impulsion d'enregistrement conformément à l'inclinaison détectée, et
        (b2) ajuster la puissance et/ou la durée requise pour l'enregistrement par rapport à l'inclinaison détectée afin de compenser la taille d'une marque d'enregistrement formée par le signal d'enregistrement.

2. Procédé selon la revendication 1, dans lequel le schéma prédéterminé ajuste un niveau de puissance optique requis pour enregistrer le signal d'enregistrement.

3. Procédé selon la revendication 1 ou 2, dans lequel le schéma prédéterminé ajuste l'heure requise pour l'enregistrement du signal d'enregistrement.

4. Procédé selon la revendication 1, dans lequel à l'étape (b), la longueur de la marque est compensée en ajustant la puissance d'écriture, et la largeur de la marque est compensée en ajustant la durée d'écriture.

5. Procédé selon la revendication 4, dans lequel le signal d'enregistrement a un motif d'enregistrement comportant un certain nombre d'impulsions dans un signal à impulsions multiples et la largeur de la marque est compensée en ajustant l'heure de fin d'une première impulsion et/ou l'heure de début d'une dernière impulsion du signal à impulsions multiples.

6. Procédé selon la revendication 1, dans lequel des marques et des espaces sont enregistrés sur le support d'enregistrement optique par l'intermédiaire du signal d'enregistrement ayant le motif d'enregistrement prédéterminé dans lequel chaque marque sur le support d'enregistrement optique est formée par une chaîne d'impulsions multiples et dans lequel le procédé comporte l'étape consistant à utiliser une mémoire pour mémoriser des valeurs de puissance et/ou de durée requises pour l'enregistrement par l'intermédiaire desquelles la longueur et la largeur d'une marque sont compensées par rapport à l'inclinaison détectée.

7. Procédé selon la revendication 1, dans lequel une défocalisation d'un support d'enregistrement optique est de plus compensée en détectant une défocalisation du support d'enregistrement optique et en compensant le signal d'enregistrement par un schéma prédéterminé par rapport à la défocalisation détectée.

8. Procédé selon la revendication 7, dans lequel la compensation du signal d'enregistrement conformément à l'inclinaison détectée à l'étape (b1) comporte l'étape consistant à décaler le point de départ du motif d'enregistrement d'une quantité égale à la quantité selon laquelle le motif d'enregistrement a été décalé du fait de l'inclinaison, ledit décalage étant effectué dans une direction qui est opposée à la direction due à l'inclinaison détectée.

9. Procédé selon la revendication 8, dans lequel le schéma prédéterminé ajuste le niveau de puissance optique par rapport à la défocalisation détectée.

10. Procédé selon la revendication 8 ou 9, dans lequel à l'étape (b2), la longueur de la marque est compensée en ajustant la puissance d'écriture, et la largeur de la marque est compensée en ajustant la durée d'écriture.

11. Procédé selon la revendication 10, dans lequel la longueur de la marque est compensée en ajustant la puissance d'écriture, et la largeur de la marque est compensée en ajustant l'heure de fin d'une première impulsion ou l'heure de début d'une dernière impulsion du motif d'enregistrement.

12. Procédé selon la revendication 8, dans lequel à l'étape (b2), la longueur de la marque est compensée en ajustant la puissance d'écriture, et la largeur de la marque est compensée en ajustant la puissance d'écriture d'une chaîne d'impulsions multiples du motif d'enregistrement.

**13.** Dispositif de compensation d'inclinaison qui enregistre et/ou lit des informations sur un support d'enregistrement optique, le dispositif comportant :

un détecteur d'inclinaison (108) pour détecter l'inclinaison d'un support d'enregistrement optique (102), et
un compensateur d'enregistrement (112) pour compenser un signal d'enregistrement dans lequel chaque marque sur le support optique est enregistrée en utilisant un motif d'enregistrement prédéterminé, le dispositif étant **caractérisé en ce que** le compensateur d'enregistrement (112) est conçu pour décaler le point de départ du motif d'enregistrement en changeant la synchronisation de génération d'une impulsion d'enregistrement par rapport à l'inclinaison détectée par le détecteur d'inclinaison (108) et pour compenser la longueur et la largeur d'une marque en ajustant la puissance du signal d'enregistrement et la durée nécessaire à l'enregistrement.

**14.** Dispositif de compensation d'inclinaison selon la revendication 13, dans lequel la longueur de la marque est compensée en ajustant la puissance du signal d'enregistrement, et la largeur de la marque est compensée en ajustant la durée requise pour l'enregistrement.

**15.** Dispositif de compensation d'inclinaison selon la revendication 13, dans lequel la longueur de la marque est compensée en ajustant la puissance du signal d'enregistrement, et dans lequel le motif d'enregistrement du signal d'enregistrement comporte une chaîne d'impulsions multiples pour la formation de chaque marque sur le support d'enregistrement optique, la largeur de la marque à compenser étant commandée en ajustant l'heure de fin d'une première impulsion/l'impulsion de début de la dernière impulsion dans la chaîne d'impulsions multiples.

**16.** Dispositif de compensation d'inclinaison selon la revendication 13, dans lequel la longueur de la marque est compensée en ajustant la puissance du signal d'enregistrement, et dans lequel le motif d'enregistrement du signal d'enregistrement comporte une chaîne d'impulsions multiples pour la formation de chaque marque sur le support d'enregistrement optique, la largeur de la marque à compenser étant commandée en ajustant la puissance de la chaîne d'impulsions multiples.

**17.** Dispositif selon la revendication 13, dans lequel des marques et des espaces sont enregistrés sur le support d'enregistrement optique par l'intermédiaire du signal d'enregistrement dans lequel chaque marque sur le support d'enregistrement optique est formée par une chaîne d'impulsions multiples et le dispositif comportant en outre : une mémoire conçue pour mémoriser des valeurs de puissance et/ou de durée requises pour l'enregistrement par l'intermédiaire desquelles la longueur et la largeur d'une marque sont compensées par rapport à l'inclinaison détectée.

**18.** Dispositif selon la revendication 13, dans lequel une défocalisation est de plus compensée, le dispositif comportant en outre :

un détecteur de défocalisation (208) pour détecter la défocalisation du support d'enregistrement optique (202), et
un compensateur d'enregistrement (210) compense le signal d'enregistrement par rapport à l'inclinaison et à la défocalisation détectées par les détecteurs d'inclinaison et de défocalisation, dans lequel la puissance du signal d'enregistrement est ajustée par rapport à la défocalisation détectée, et le compensateur d'enregistrement (210) est conçu pour générer le motif d'enregistrement à l'avance afin de compenser la quantité de décalage par rapport à l'inclinaison détectée, et la longueur et la largeur d'une marque sont compensées en ajustant respectivement la puissance du signal d'enregistrement et/ou la durée pendant laquelle le signal d'enregistrement est généré.

**19.** Dispositif selon la revendication 18, dans lequel la longueur de la marque est compensée en ajustant la puissance du signal d'enregistrement, et la largeur d'une marque est compensée en ajustant la durée requise pour l'enregistrement.

**20.** Dispositif selon la revendication 19, dans lequel le motif d'enregistrement pour enregistrer chaque marque sur le support d'enregistrement optique comporte une chaîne d'impulsions multiples et la largeur d'une marque est compensée en ajustant l'heure de fin de la première impulsion/l'heure de début de la dernière impulsions de la chaîne d'impulsions multiples.

**21.** Dispositif selon la revendication 18, dans lequel le motif d'enregistrement pour enregistrer chaque marque sur le support d'enregistrement optique comporte une chaîne d'impulsions multiples et la largeur d'une marque est compensée en ajustant la puissance de la chaîne d'impulsions multiples.

**22.** Dispositif selon la revendication 13, dans lequel l'inclinaison et la défocalisation d'un support d'enregistrement optique sont compensées, et dans lequel des marques et des espaces sont enregistrés par l'intermédiaire du signal d'enregistrement et où chaque marque enregistrée est enregistrée en utilisant une chaîne d'impulsions multiples d'impulsions d'écriture, le dispositif comportant en outre :

un détecteur de focalisation (208) pour détecter la défocalisation d'un support d'enregistrement optique (202), et
une mémoire pour mémoriser la puissance d'écriture de compensation par rapport à la défocalisation, et des valeurs de puissance et/ou de durée requises pour l'enregistrement afin de compenser la quantité de décalage du motif d'enregistrement, et la longueur et la largeur d'une marque par rapport à l'inclinaison/la longueur d'une marque.

**23.** Dispositif selon la revendication 22, dans lequel dans la mémoire, des valeurs de puissance et/ou de durée, et la quantité de décalage requise pour l'enregistrement, qui correspondent à un cas dans lequel une défocalisation et une inclinaison surviennent ensemble, et à un cas dans lequel une défocalisation ou une inclinaison survient, respectivement, sont mémorisées.

FIG. 1

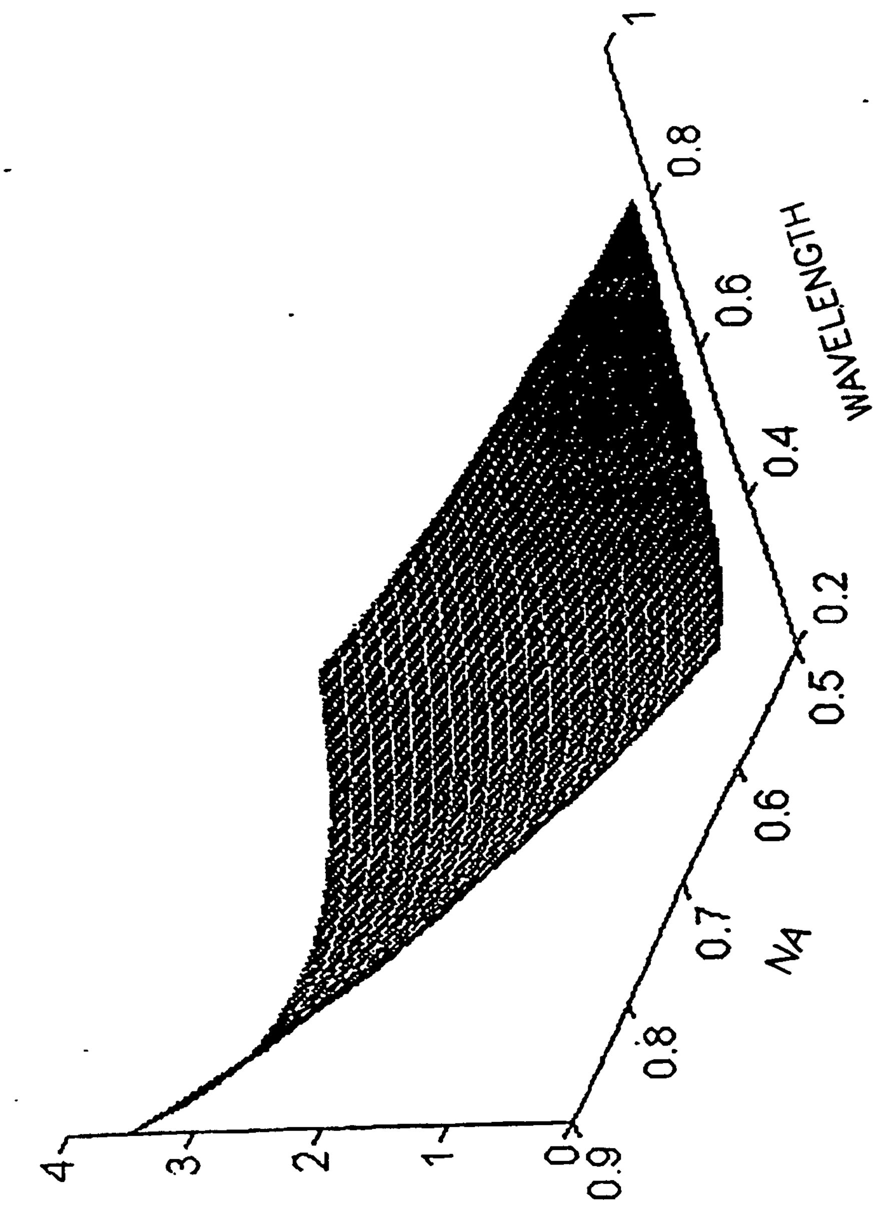

FIG. 2

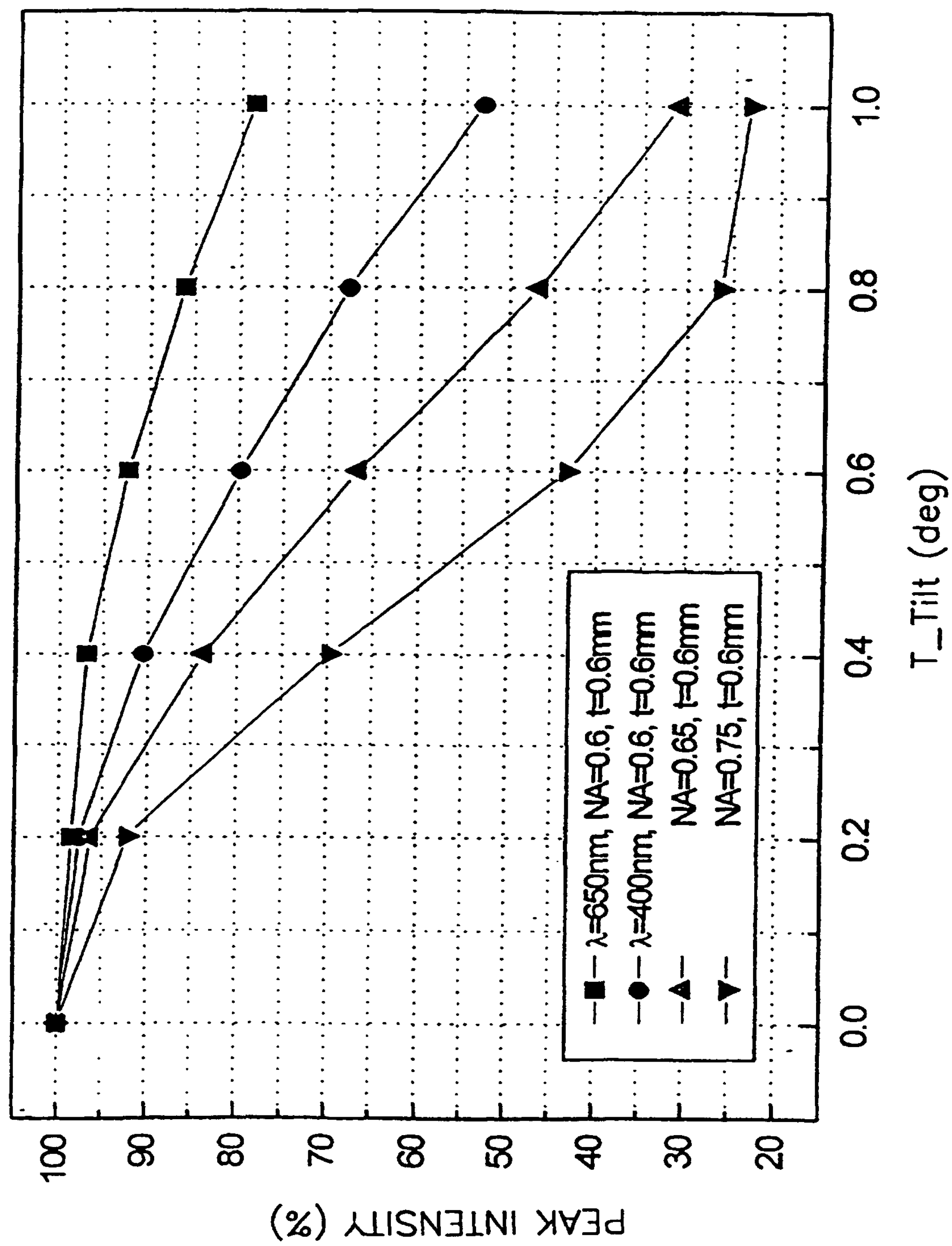
λ=650nm, NA=0.6, t=0.6mm
λ=400mm, NA=0.6, t=0.6mm
NA=0.65, t=0.6mm
NA=0.75, t=0.6mm
PEAK INTENSITY (%)
100
90
80
70
60
50
40
30
20
0.0
0.2
0.4
0.6
0.8
1.0
T_Tilt (deg)

FIG. 3

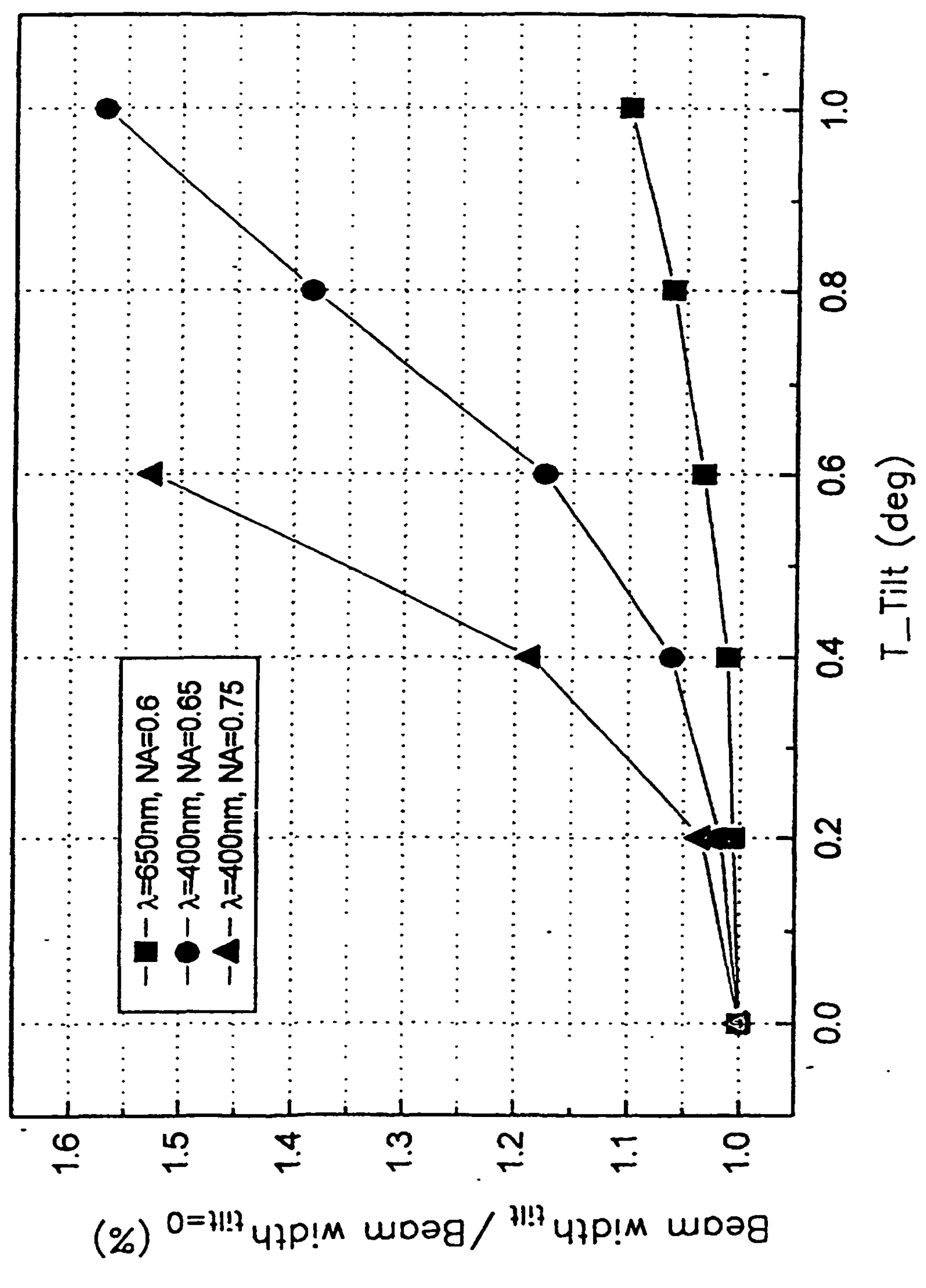
λ=650nm, NA=0.6
λ=400nm, NA=0.65
λ=400nm, NA=0.75
T_Tilt (deg)
0.0
0.2
0.4
0.6
0.8
1.0
Beam width$_{tilt}$ /Beam width$_{tilt=0}$ (%)
1.0
1.1
1.2
1.3
1.4
1.5
1.6

FIG. 4

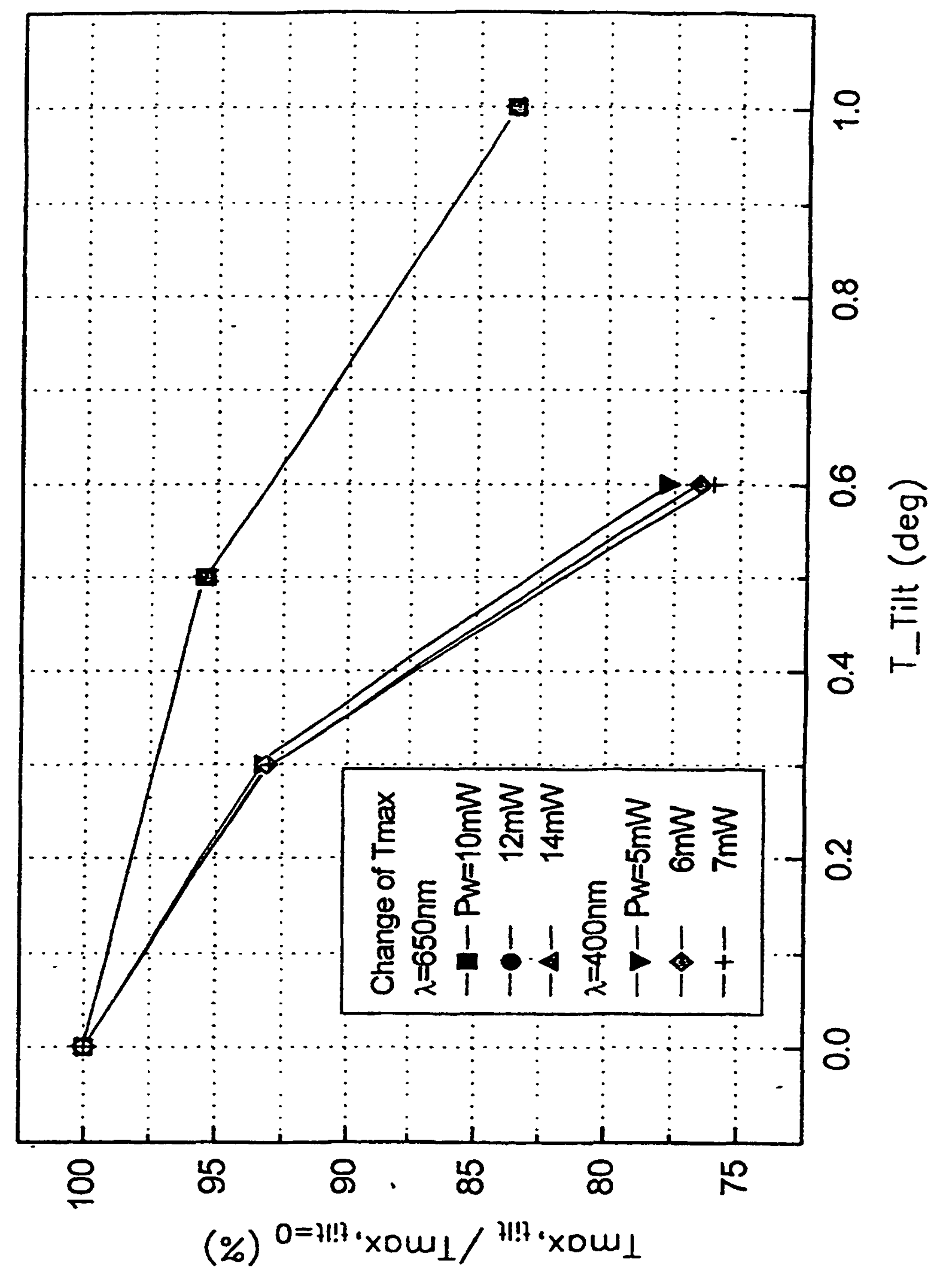

Change of Tmax
λ=650nm
Pw=10mW
12mW
14mW
λ=400nm
Pw=5mW
6mW
7mW
T_Tilt (deg)
Tmax, tilt /Tmax, tilt=0 (%)
100
95
90
85
80
75
0.0
0.2
0.4
0.6
0.8
1.0

FIG. 5

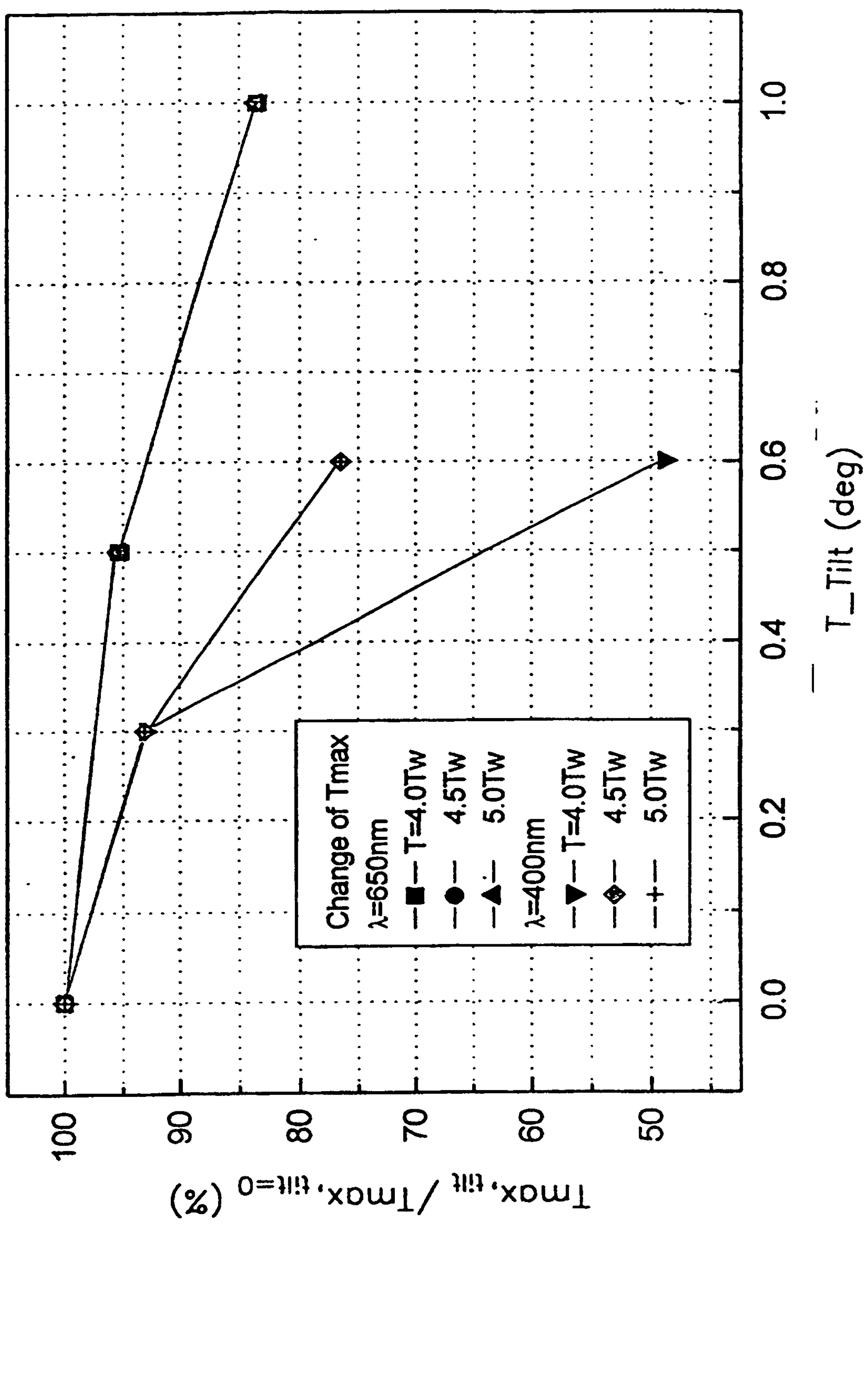
Change of Tmax
λ=650nm
T=4.0Tw
4.5Tw
5.0Tw
λ=400nm
T=4.0Tw
4.5Tw
5.0Tw
T_Tilt (deg)
Tmax, tilt /Tmax, tilt=0 (%)
100
90
80
70
60
50
0.0
0.2
0.4
0.6
0.8
1.0

FIG. 6

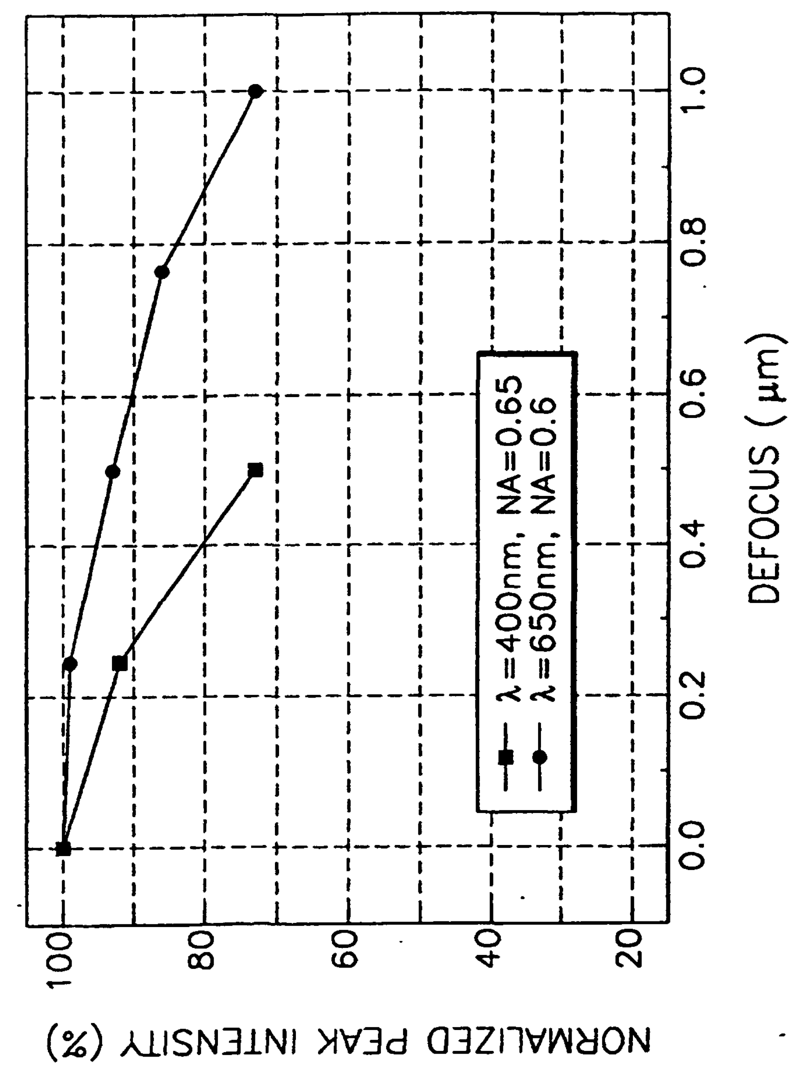

NORMALIZED PEAK INTENSITY (%)
100
80
60
40
20
0.0
0.2
0.4
0.6
0.8
1.0
DEFOCUS (μm)
λ=400nm, NA=0.65
λ=650nm, NA=0.6

FIG. 7

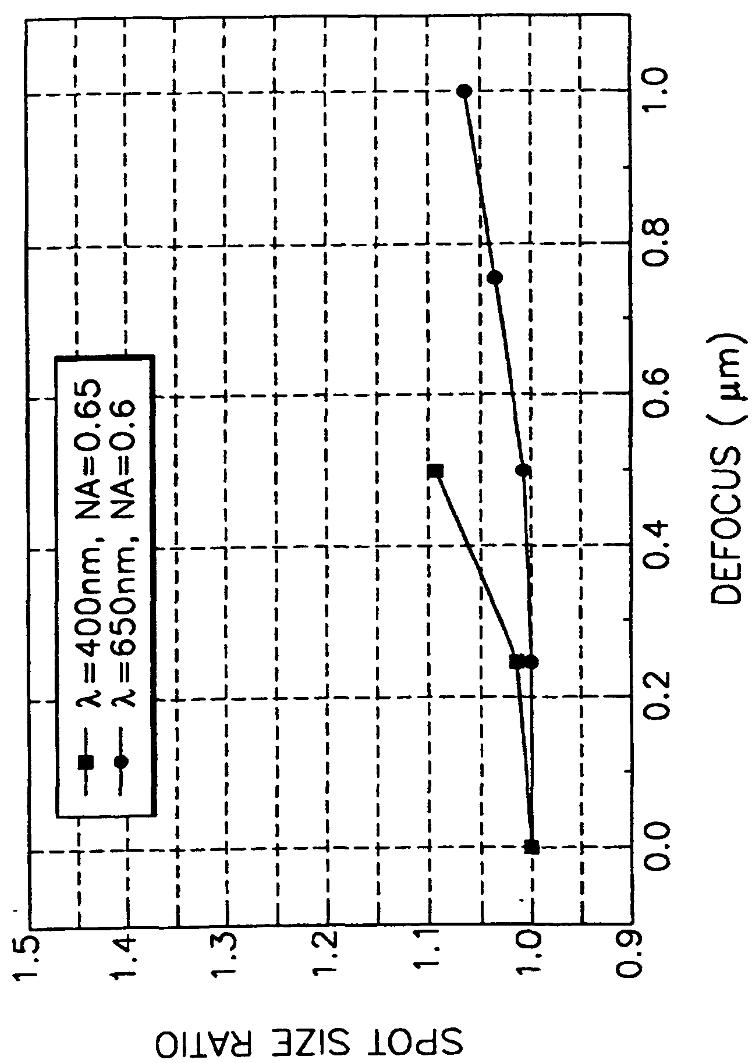
λ=400nm, NA=0.65
λ=650nm, NA=0.6
SPOT SIZE RATIO
1.5
1.4
1.3
1.2
1.1
1.0
0.9
DEFOCUS ( μm)
0.0
0.2
0.4
0.6
0.8
1.0

FIG. 8

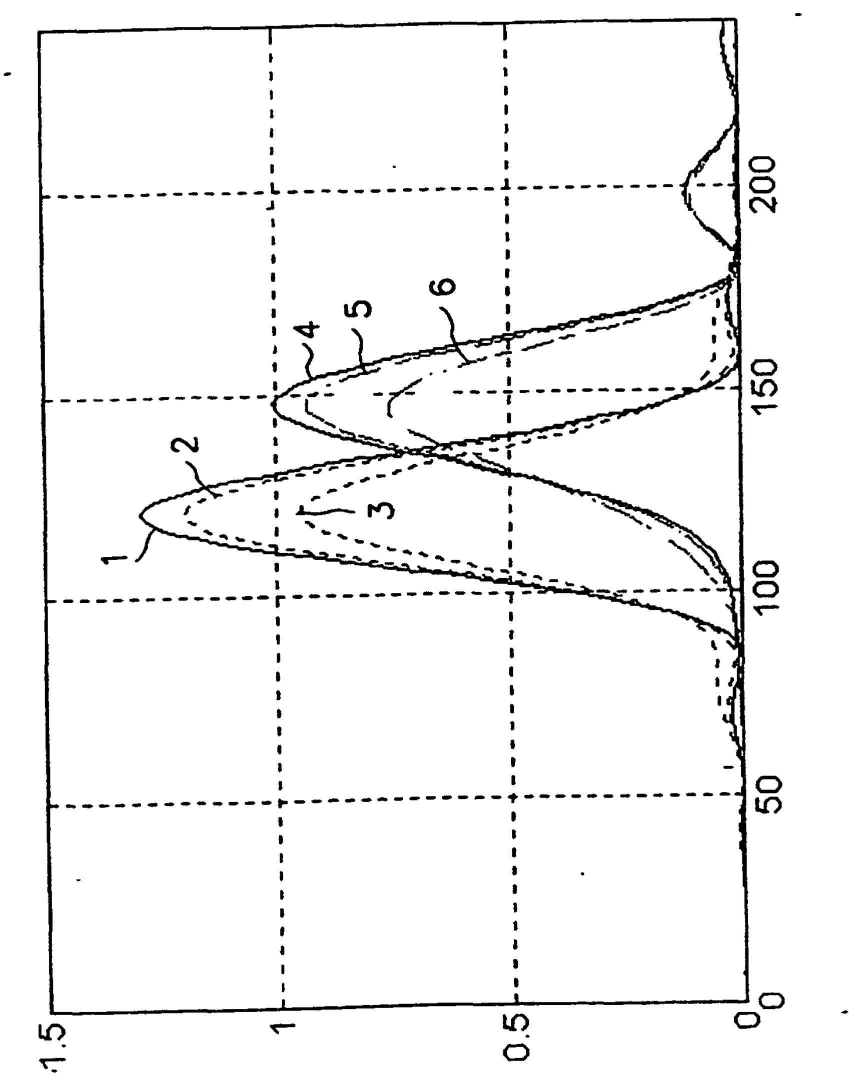

FIG. 9

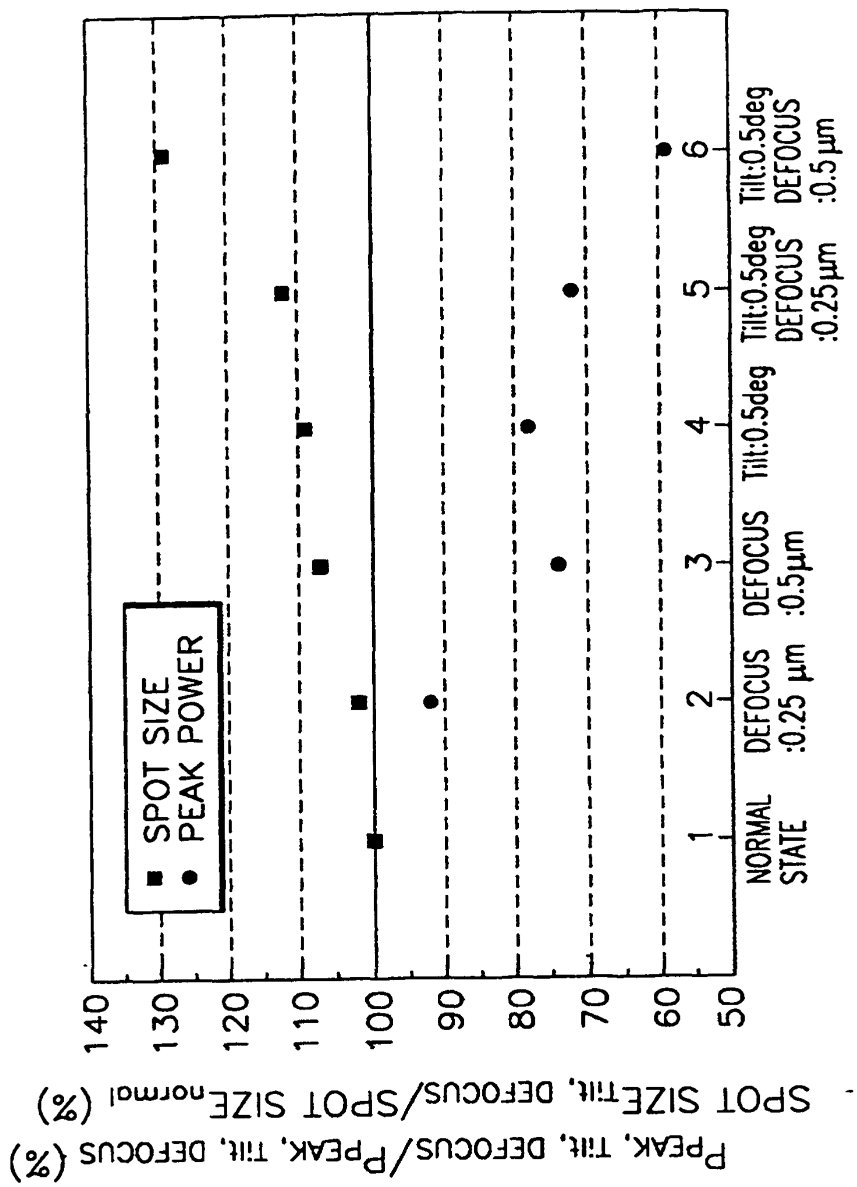
SPOT SIZE
PEAK POWER
140
130
120
110
100
90
80
70
60
50
SPOT SIZE$_{Tilt, DEFOCUS}$/SPOT SIZE$_{normal}$ (%)
P$_{PEAK, Tilt, DEFOCUS}$/P$_{PEAK, Tilt, DEFOCUS}$ (%)
1
2
3
4
5
6
NORMAL STATE
DEFOCUS :0.25 μm
DEFOCUS :0.5μm
Tilt:0.5deg
Tilt:0.5deg DEFOCUS :0.25μm
Tilt:0.5deg DEFOCUS :0.5 μm

FIG. 10

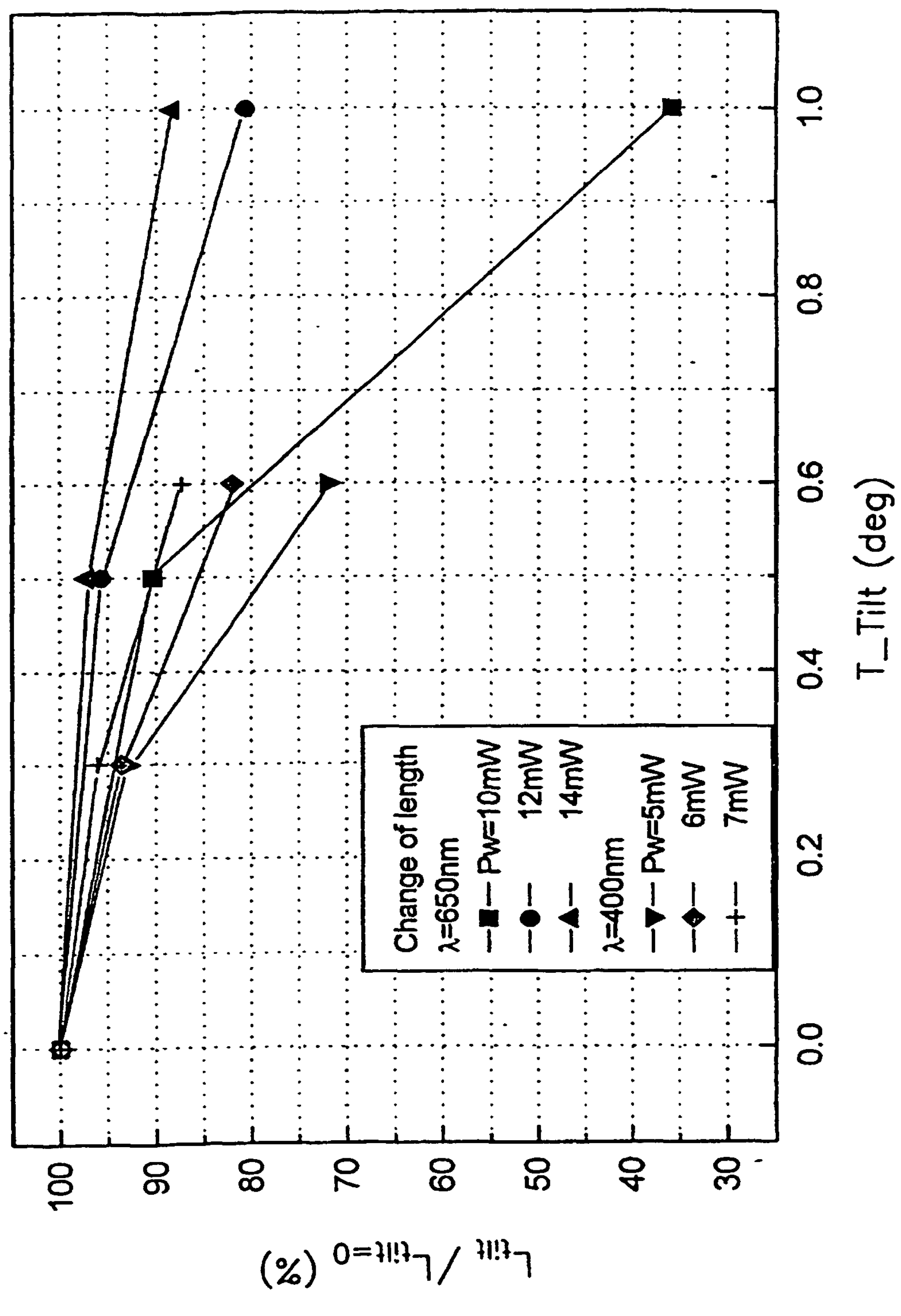
Change of length
λ=650nm
Pw=10mW
12mW
14mW
λ=400nm
Pw=5mW
6mW
7mW
T_Tilt (deg)
0.0
0.2
0.4
0.6
0.8
1.0
100
90
80
70
60
50
40
30

FIG. 11

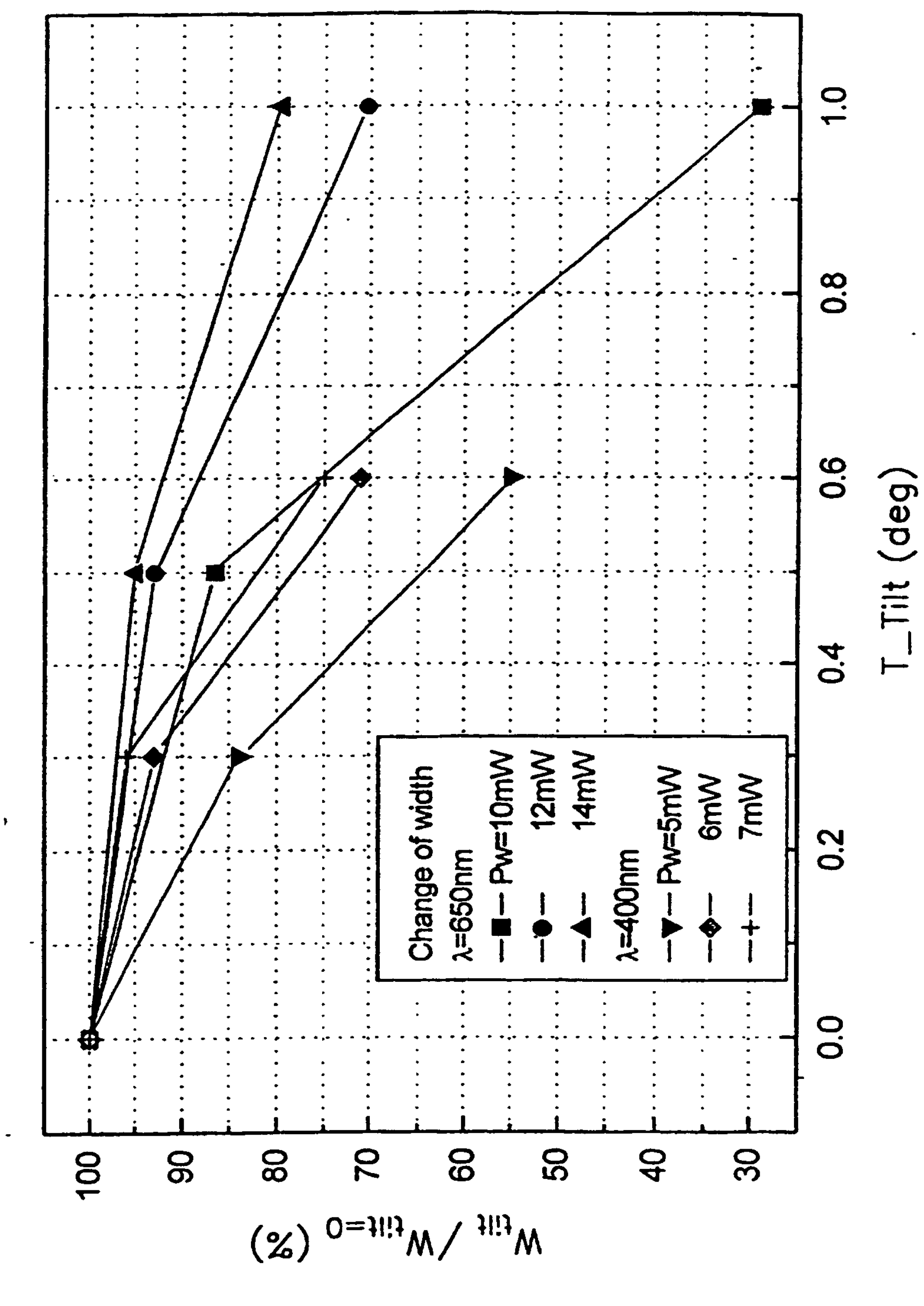

Change of width
λ=650nm
Pw=10mW
12mW
14mW
λ=400nm
Pw=5mW
6mW
7mW
T_Tilt (deg)
0.0
0.2
0.4
0.6
0.8
1.0
W_tilt / W_tilt=0 (%)
100
90
80
70
60
50
40
30

# FIG. 12A

| Pw (mW) | Tilt (deg) | Tmax (C) | L (nm) | W (nm) |
|---|---|---|---|---|
| 10 | 0 | 754.6 | 755.5 | 345.2 |
| | 0.5 | 720.0 | 682.9 | 298.7 |
| | 1.0 | 630.7 | 248.6 | 96.3 |
| 12 | 0 | 901.9 | 926.6 | 484.1 |
| | 0.5 | 860.7 | 887.5 | 450.0 |
| | 1.0 | 753.9 | 747.3 | 340.5 |
| 14 | 0 | 1048.9 | 1026.5 | 577.9 |
| | 0.5 | 1000.7 | 997.7 | 548.7 |
| | 1.0 | 876.6 | 907.1 | 459.8 |

# FIG. 12B

| Pw (mW) | Tilt (deg) | Tmax (C) | L (nm) | W (nm) |
|---|---|---|---|---|
| 5 | 0 | 834.0 | 518.1 | 277.9 |
| | 0.3 | 778.1 | 493.8 | 240.9 |
| | 0.6 | 648.7 | 381.0 | 156.6 |
| 6 | 0 | 987.1 | 575.8 | 325.6 |
| | 0.3 | 919.2 | 551.3 | 310.6 |
| | 0.6 | 755.3 | 479.9 | 238.1 |
| 7 | 0 | 1141.9 | 615.0 | 368.6 |
| | 0.3 | 1062.2 | 590.7 | 356.0 |
| | 0.6 | 867.9 | 537.3 | 282.2 |

FIG. 13

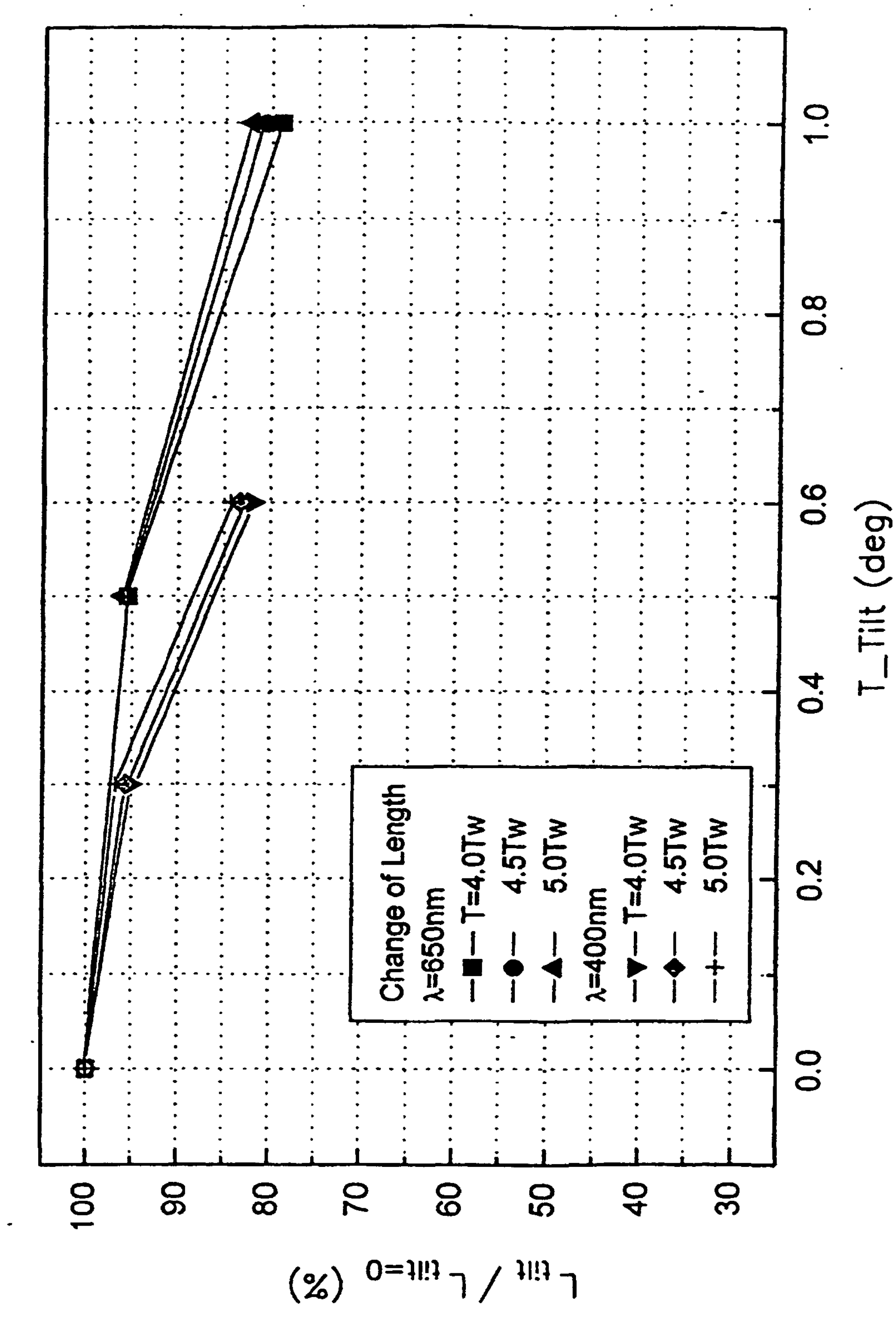
Change of Length
λ=650nm
T=4.0Tw
4.5Tw
5.0Tw
λ=400nm
T=4.0Tw
4.5Tw
5.0Tw
100
90
80
70
60
50
40
30
0.0
0.2
0.4
0.6
0.8
1.0
T_Tilt (deg)
L tilt / L tilt=0 (%)

FIG. 14

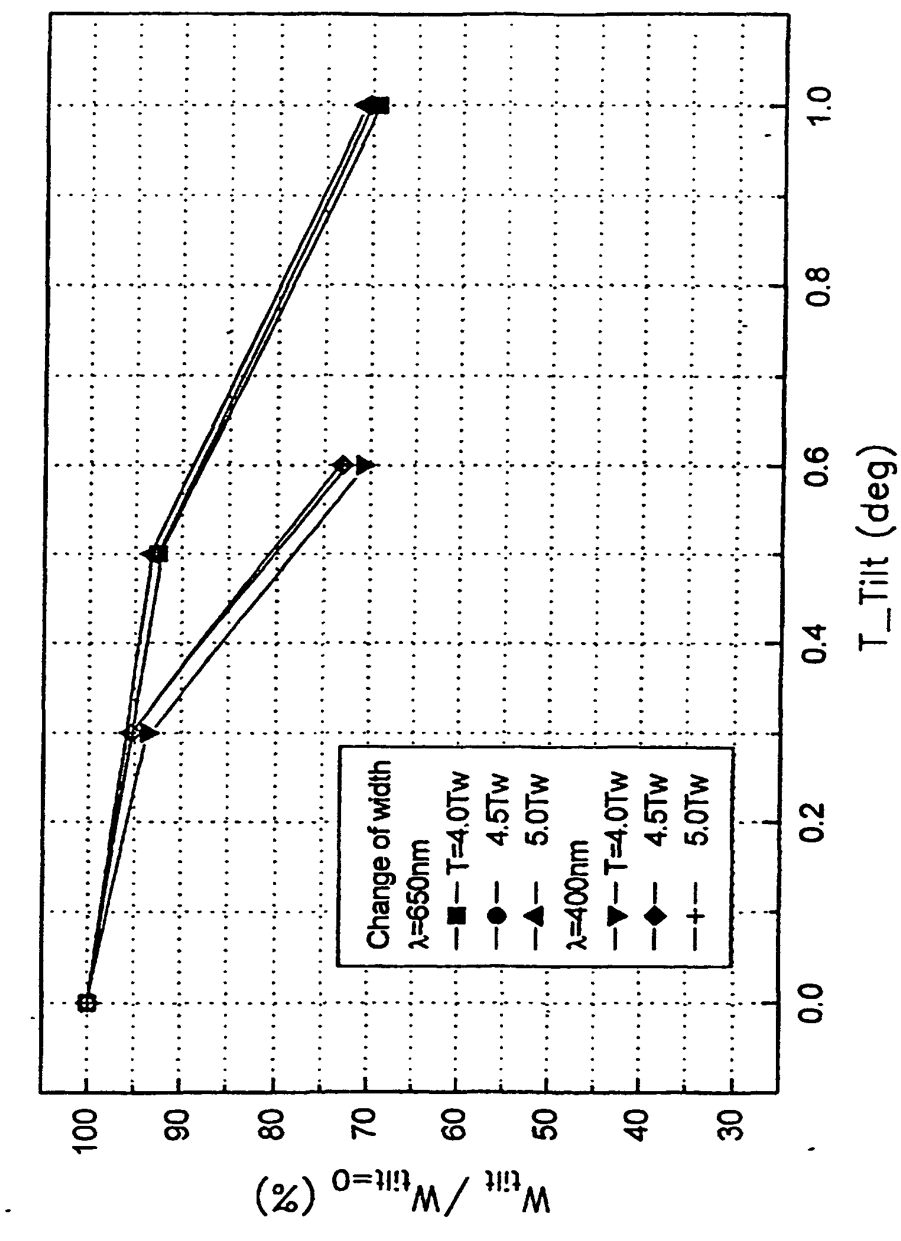
Change of width
λ=650nm
T=4.0Tw
4.5Tw
5.0Tw
λ=400nm
T=4.0Tw
4.5Tw
5.0Tw
100
90
80
70
60
50
40
30
0.0
0.2
0.4
0.6
0.8
1.0
T_Tilt (deg)
$W_{tilt}$ / $W_{tilt=0}$ (%)

# FIG. 15A

| Pw (mW) | Tilt (deg) | Tmax (C) | L (nm) | W (nm) |
|---|---|---|---|---|
| 4Tw | 0 | 895.8 | 853.8 | 477.1 |
| | 0.5 | 853.8 | 814.5 | 441.6 |
| | 1.0 | 747.6 | 673.2 | 330.6 |
| 4.5Tw | 0 | 901.9 | 926.6 | 484.1 |
| | 0.5 | 860.7 | 887.5 | 450.0 |
| | 1.0 | 753.9 | 747.3 | 340.5 |
| 5Tw | 0 | 908.7 | 998.2 | 490.3 |
| | 0.5 | 866.2 | 959.1 | 456.8 |
| | 1.0 | 759.5 | 820.1 | 347.3 |

# FIG. 15B

| Pw (mW) | Tilt (deg) | Tmax (C) | L (nm) | W (nm) |
|---|---|---|---|---|
| 4Tw | 0 | 980.6 | 538.2 | 323.8 |
| | 0.5 | 912.0 | 512.0 | 303.4 |
| | 1.0 | 748.9 | 441.0 | 229.5 |
| 4.5Tw | 0 | 987.1 | 575.8 | 325.6 |
| | 0.5 | 919.2 | 551.3 | 310.6 |
| | 1.0 | 755.3 | 479.9 | 238.1 |
| 5Tw | 0 | 993.3 | 612.3 | 329.0 |
| | 0.5 | 925.2 | 592.7 | 315.2 |
| | 1.0 | 760.1 | 516.3 | 241.2 |

FIG. 16

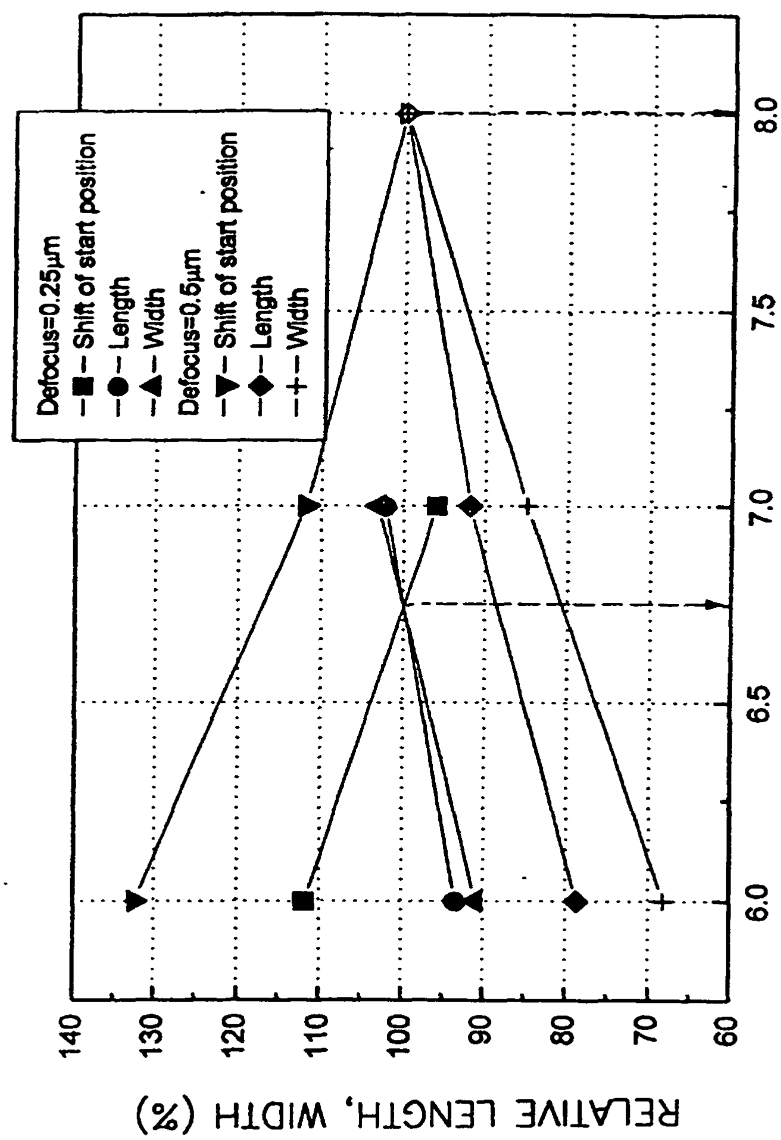
Defocus=0.25μm
Shift of start position
Length
Width
Defocus=0.5μm
Shift of start position
Length
Width
RELATIVE LENGTH, WIDTH (%)
140
130
120
110
100
90
80
70
60
6.0
6.5
7.0
7.5
8.0
Pw (mW)

FIG. 17

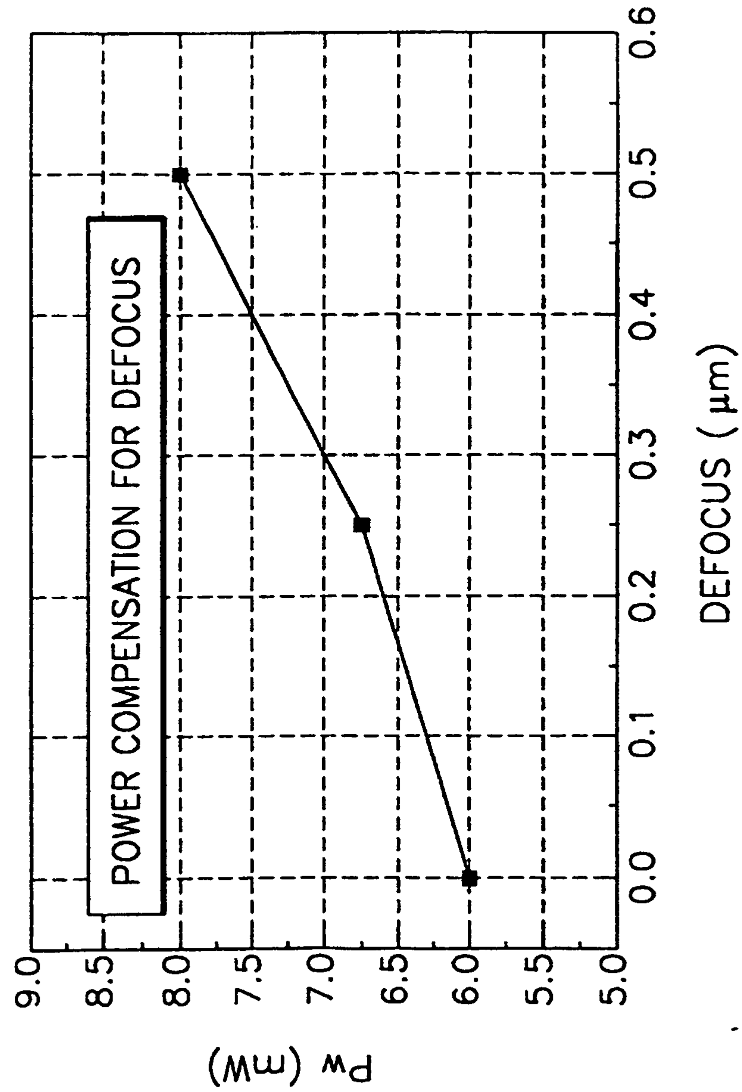
POWER COMPENSATION FOR DEFOCUS
Pw (mW)
9.0
8.5
8.0
7.5
7.0
6.5
6.0
5.5
5.0
DEFOCUS (μm)
0.0
0.1
0.2
0.3
0.4
0.5
0.6

# FIG. 18

| Pw \ Tilt | | 0° | 0.5° | 0.5°+0.25µm DEFOCUS |
|---|---|---|---|---|
| 6mW | SHIFT OF RECORDING POSITION | 0 | 0.293 | 0.293 |
| | LENGTH | 0.515 | 0.439 | 0.439 |
| | WIDTH | 0.231 | 0.174 | 0.174 |
| 7mW | SHIFT OF RECORDING POSITION | — | 0.262 | 0.262 |
| | LENGTH | | 0.496 | 0.496 |
| | WIDTH | | 0.214 | 0.214 |
| 8mW | SHIFT OF RECORDING POSITION | | 0.245 | 0.704 |
| | LENGTH | | 0.535 | 0.090 |
| | WIDTH | | 0.242 | 0.051 |
| 9mW | SHIFT OF RECORDING POSITION | | — | 0.700 |
| | LENGTH | | | 0.372 |
| | WIDTH | | | 0.107 |

FIG. 19

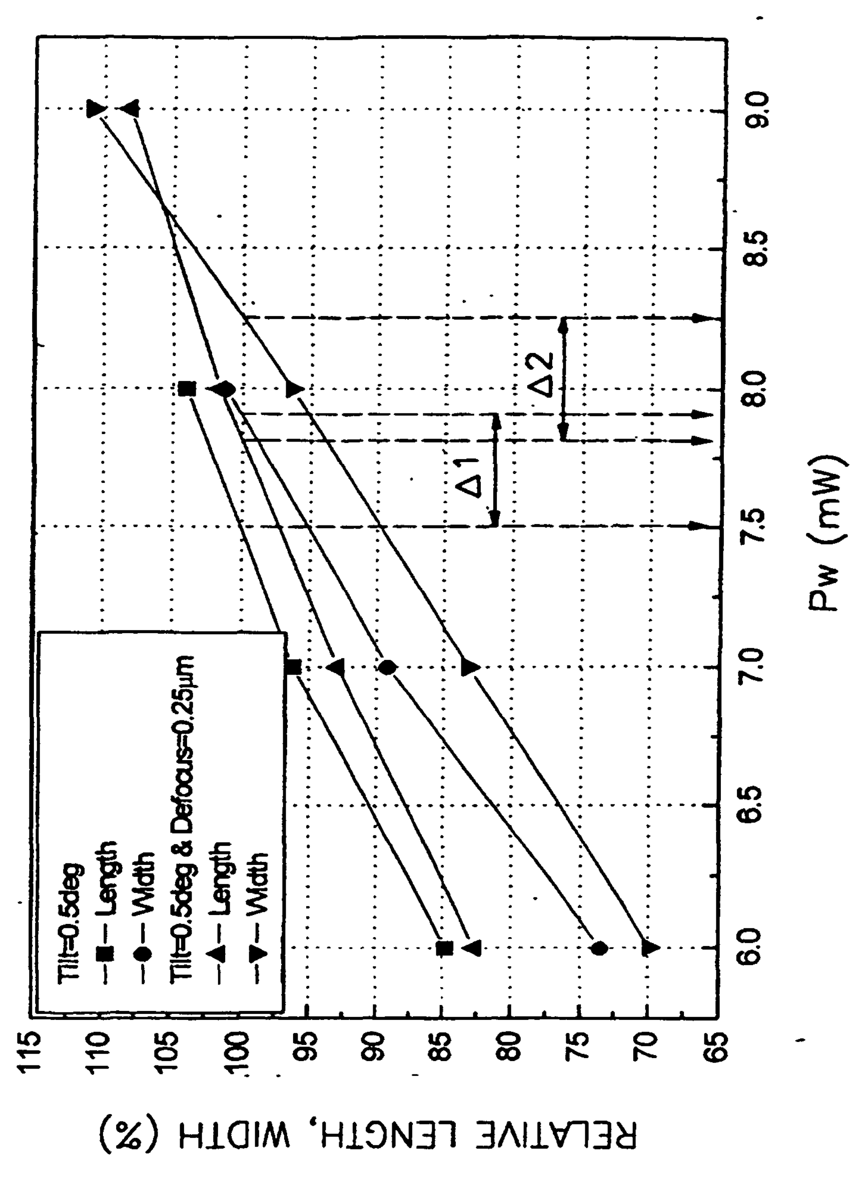
Tilt=0.5deg
—■— Length
—●— Width
Tilt=0.5deg & Defocus=0.25µm
—▲— Length
—▼— Width
Δ1
Δ2
115
110
105
100
95
90
85
80
75
70
65
RELATIVE LENGTH, WIDTH (%)
6.0
6.5
7.0
7.5
8.0
8.5
9.0
Pw (mW)

FIG. 20

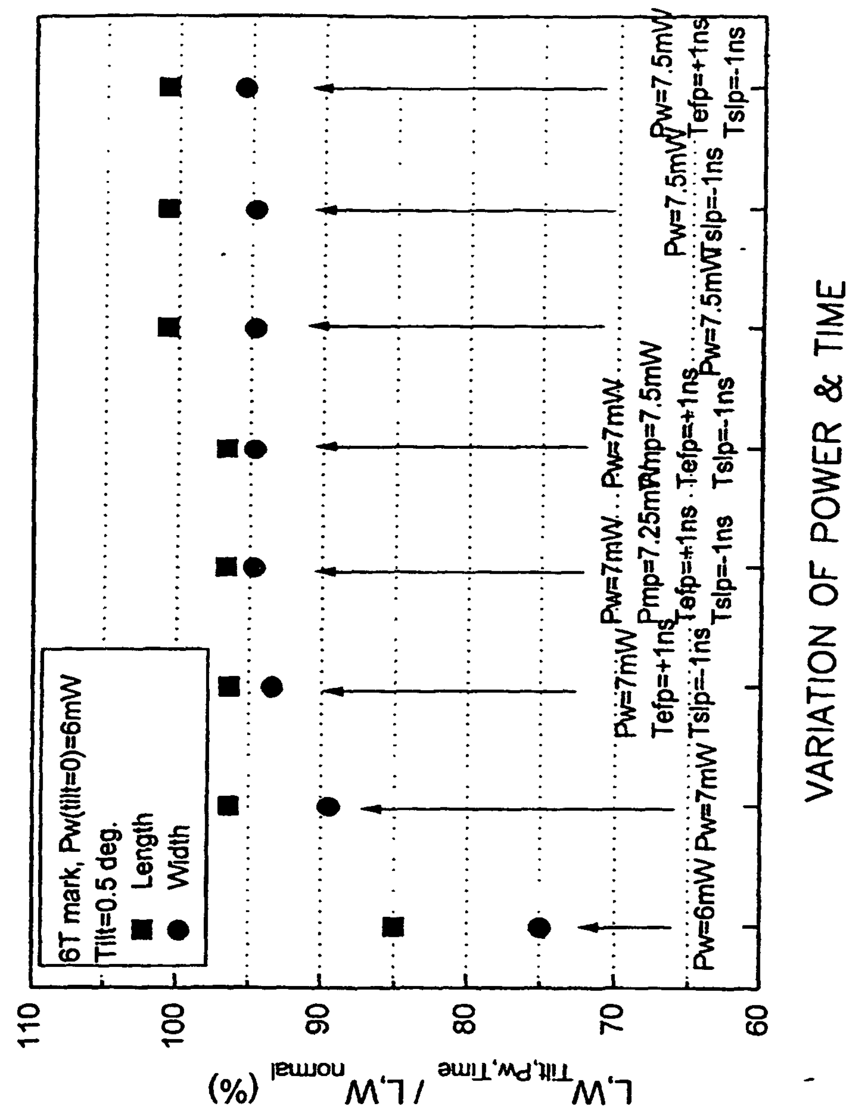
6T mark, Pw(tilt=0)=6mW
Tilt=0.5 deg.
Length
Width
110
100
90
80
70
60
L,W_Tilt,Pw,Time / L,W_normal (%)
Pw=6mW
Pw=7mW
Pw=7mW Tefp=+1ns
Pw=7mW Tslp=-1ns
Pw=7mW Pmp=7.25mW Tefp=+1ns Tslp=-1ns
Pw=7mW Pmp=7.5mW Tefp=+1ns Tslp=-1ns
Pw=7.5mW
Pw=7.5mW Tslp=-1ns
Pw=7.5mW Tefp=+1ns Tslp=-1ns
VARIATION OF POWER & TIME

FIG. 21

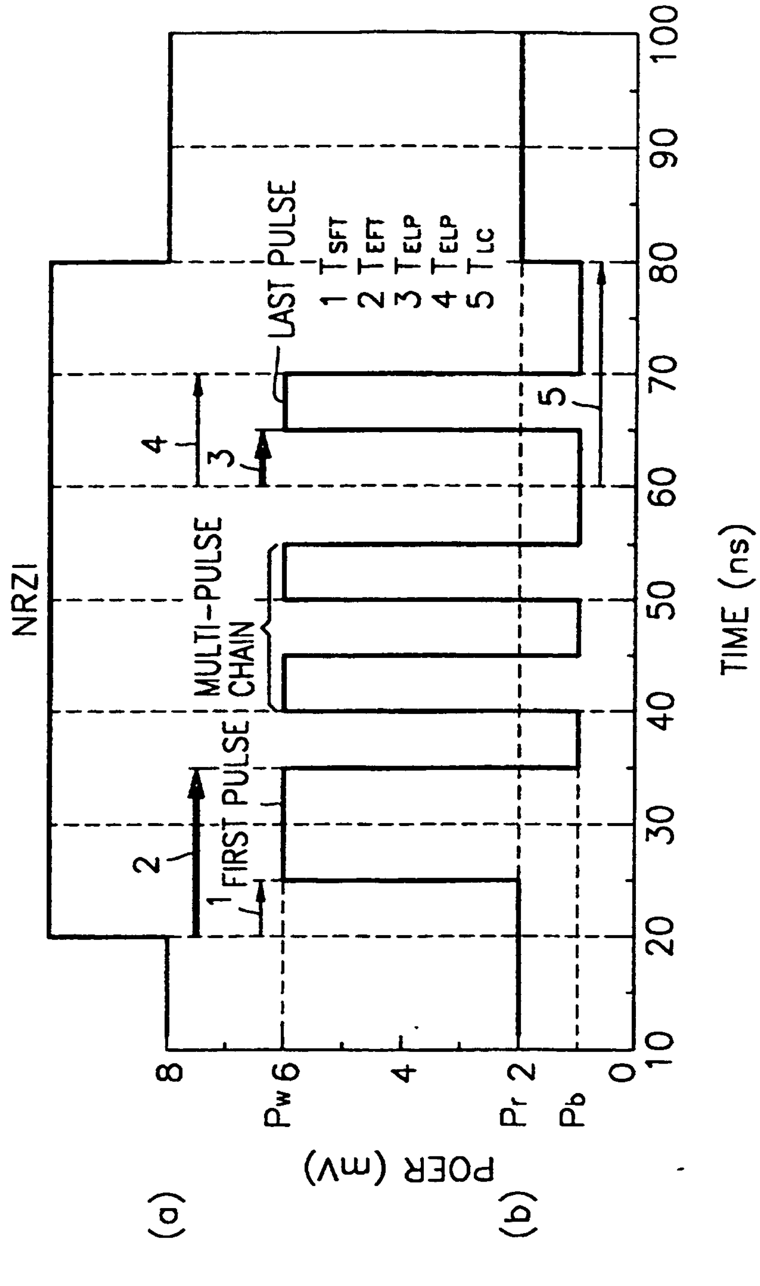

NRZI
(a)
(b)
POER (mV)
8
$P_w$ 6
4
$P_r$ 2
$P_b$
0
10
20
30
40
50
60
70
80
90
100
TIME (ns)
FIRST PULSE
MULTI-PULSE CHAIN
LAST PULSE
1 $T_{SFT}$
2 $T_{EFT}$
3 $T_{ELP}$
4 $T_{ELP}$
5 $T_{LC}$

# FIG. 22

| Pw | Tilt / MEASURED ITEM | 0° | 0.5° | 1.0° |
|---|---|---|---|---|
| 6mW | SHIFT OF RECORDING POSITION | 0 | 0.293 | NO RECORD |
| | LENGTH | 0.515 | 0.439 | |
| | WIDTH | 0.231 | 0.174 | |
| 7mW | SHIFT OF RECORDING POSITION | | 0.262 | |
| | LENGTH | | 0.496 | |
| | WIDTH | | 0.214 | |
| 8mW | SHIFT OF RECORDING POSITION | | 0.245 | 0.704 |
| | LENGTH | | 0.535 | 0.090 |
| | WIDTH | | 0.242 | 0.051 |
| 9mW | SHIFT OF RECORDING POSITION | | | 0.700 |
| | LENGTH | | | 0.372 |
| | WIDTH | | | 0.107 |

FIG. 23

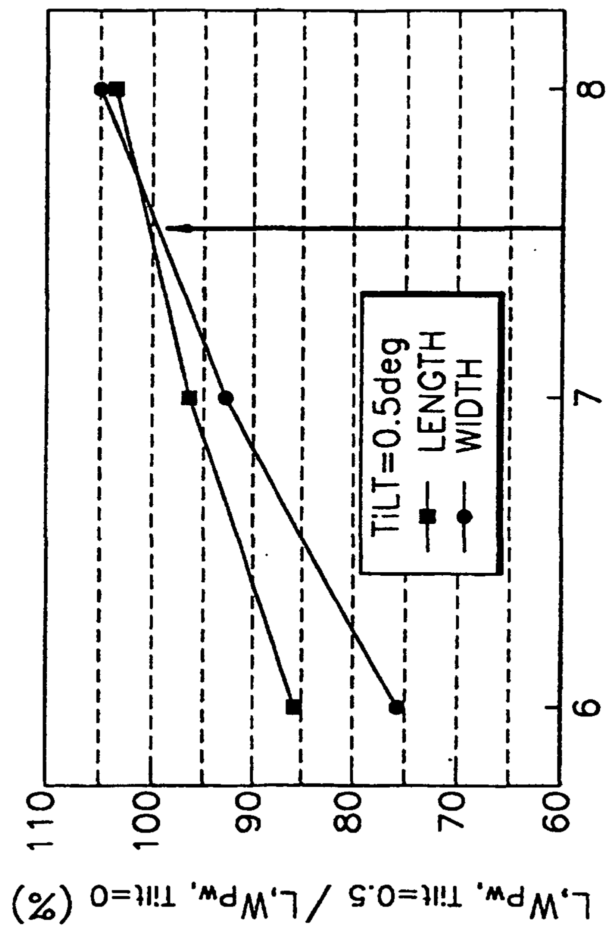
TiLT=0.5deg
LENGTH
WIDTH
110
100
90
80
70
60
6
7
8
Pw (mW)
L,WPw, Tilt=0.5 / L,WPw, Tilt=0 (%)

FIG. 24

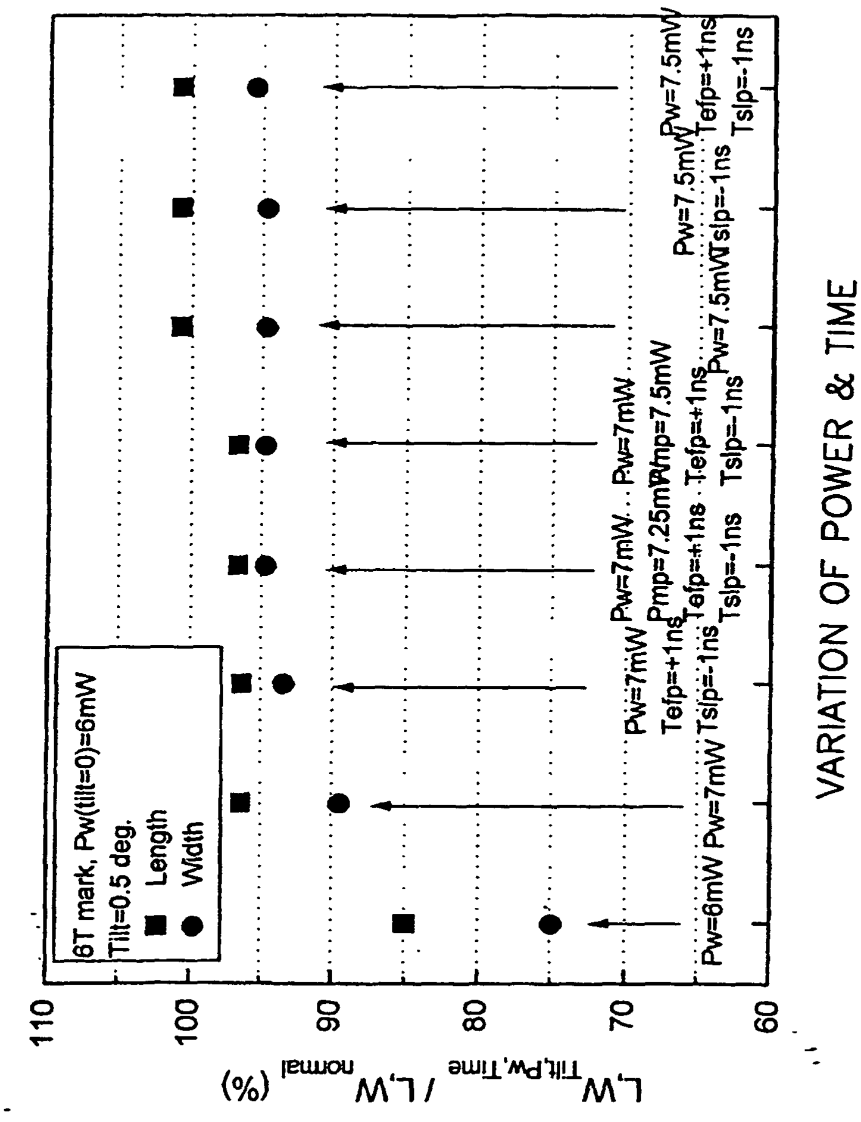
6T mark, Pw(tilt=0)=6mW
Tilt=0.5 deg.
Length
Width
$L,W_{Tilt,Pw,Time}$ / $L,W_{normal}$ (%)
110
100
90
80
70
60
Pw=6mW
Pw=7mW
Pw=7mW Tsip=-1ns
Pw=7mW Tefp=+1ns
Pw=7mW Pmp=7.25mW Tefp=+1ns Tslp=-1ns
Pw=7mW Pmp=7.5mW Tefp=+1ns Tslp=-1ns
Pw=7.5mW Tslp=-1ns
Pw=7.5mW Tslp=-1ns
Pw=7.5mW Tefp=+1ns Tslp=-1ns
VARIATION OF POWER & TIME

FIG. 25

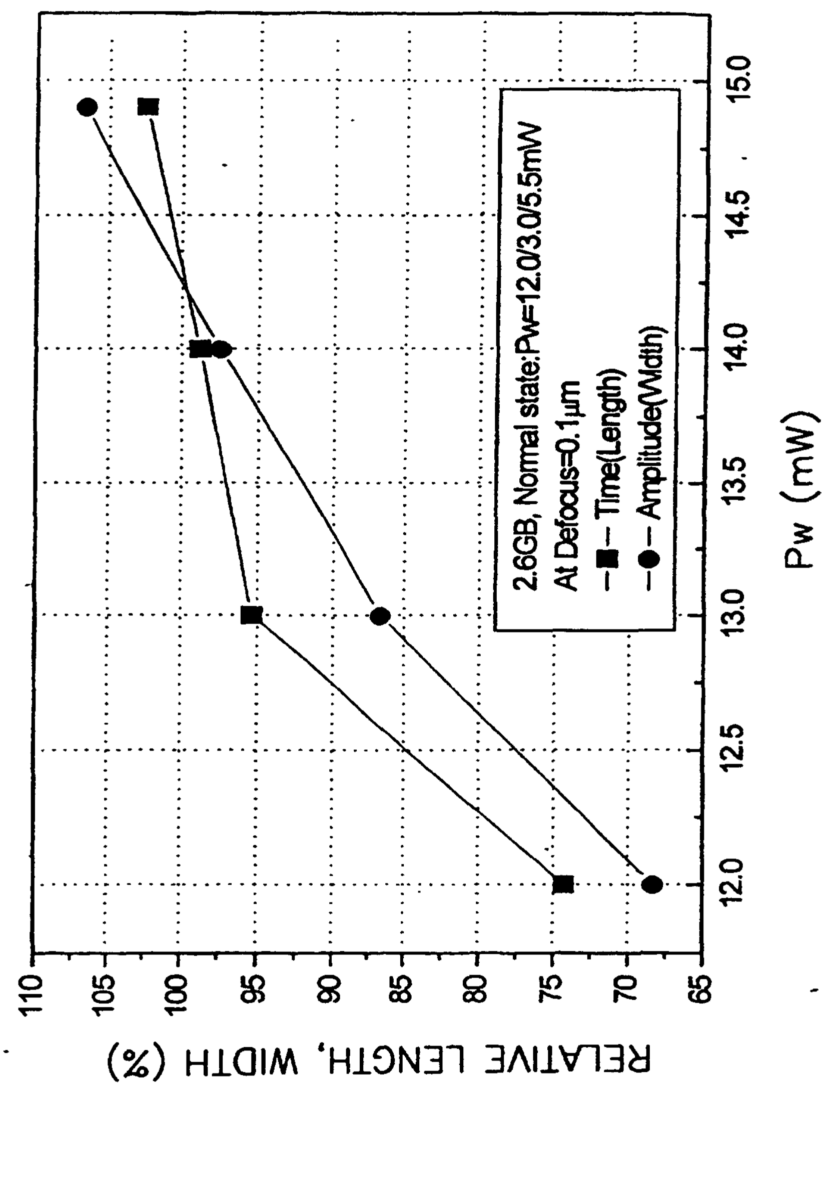
2.6GB, Normal state:Pw=12.0/3.0/5.5mW
At Defocus=0.1μm
—■— Time(Length)
—●— Amplitude(Width)
Pw (mW)
RELATIVE LENGTH, WIDTH (%)
12.0
12.5
13.0
13.5
14.0
14.5
15.0
65
70
75
80
85
90
95
100
105
110

FIG. 26

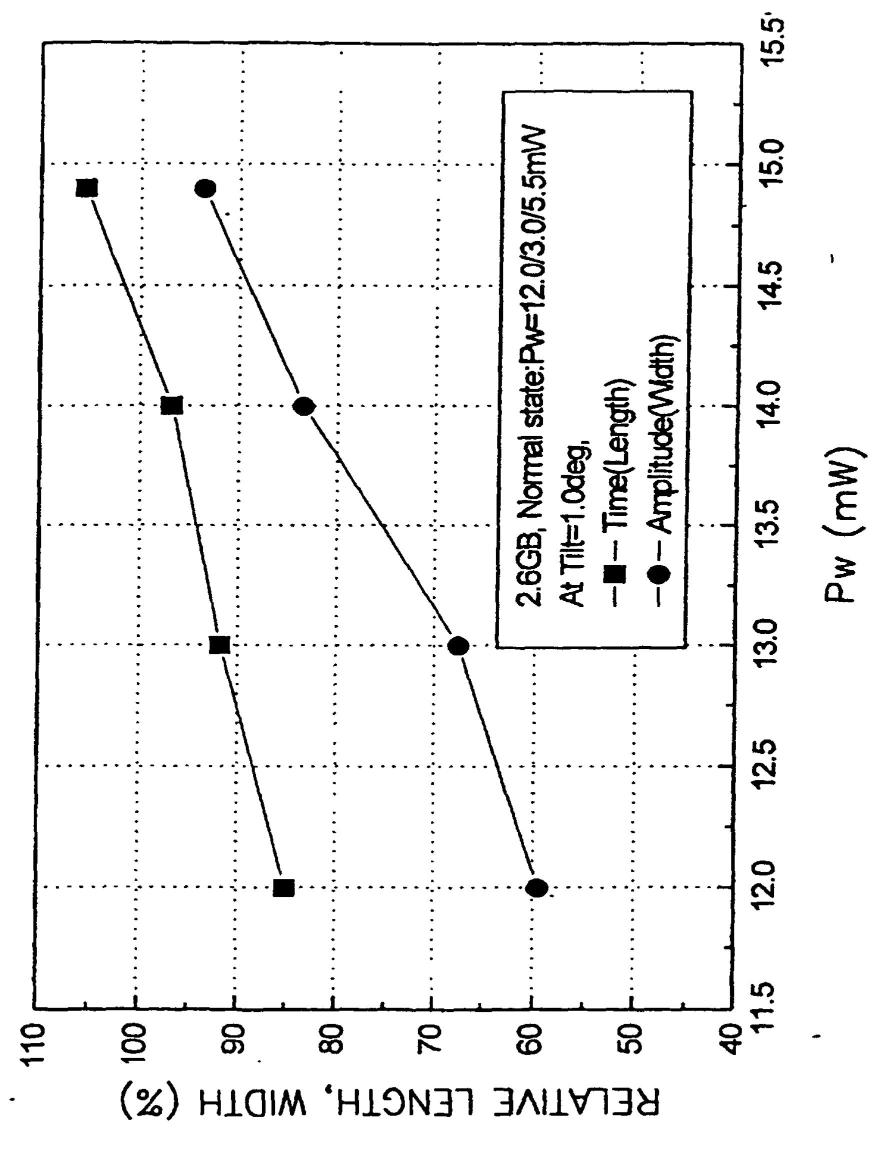
2.6GB, Normal state:Pw=12.0/3.0/5.5mW
At Tilt=1.0deg,
Time(Length)
Amplitude(Width)
RELATIVE LENGTH, WIDTH (%)
Pw (mW)
110
100
90
80
70
60
50
40
11.5
12.0
12.5
13.0
13.5
14.0
14.5
15.0
15.5

FIG. 27

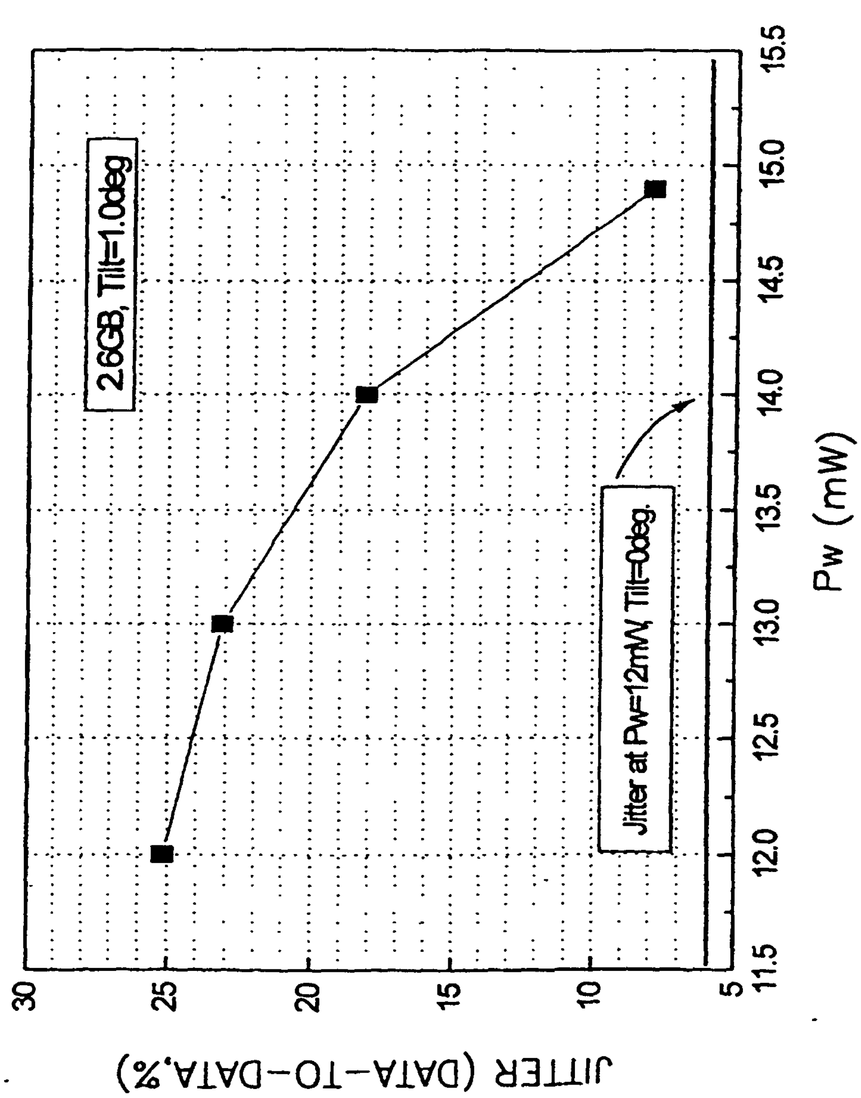
2.6GB, Tilt=1.0deg
Jitter at Pw=12mW, Tilt=0deg.
JITTER (DATA-TO-DATA,%)
30
25
20
15
10
5
11.5
12.0
12.5
13.0
13.5
14.0
14.5
15.0
15.5
Pw (mW)

FIG. 28

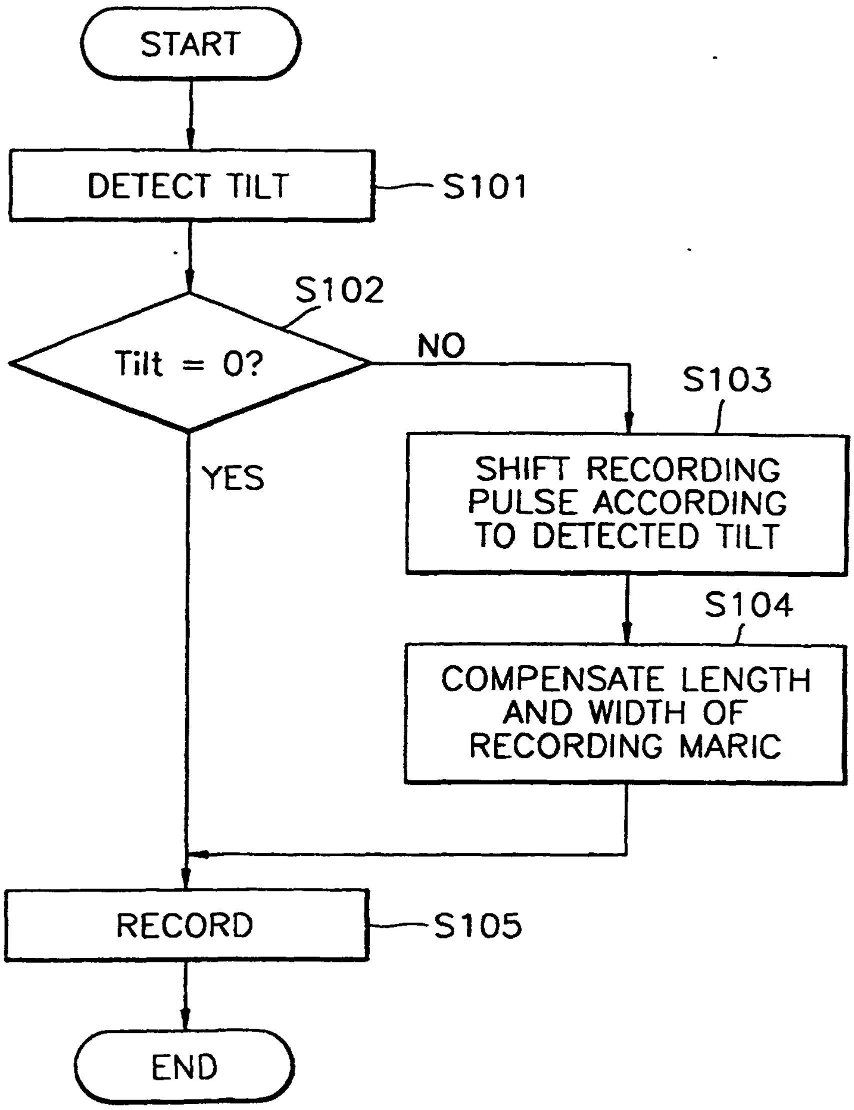
START
DETECT TILT
S101
S102
Tilt = 0?
NO
YES
S103
SHIFT RECORDING PULSE ACCORDING TO DETECTED TILT
S104
COMPENSATE LENGTH AND WIDTH OF RECORDING MARIC
RECORD
S105
END

FIG. 29

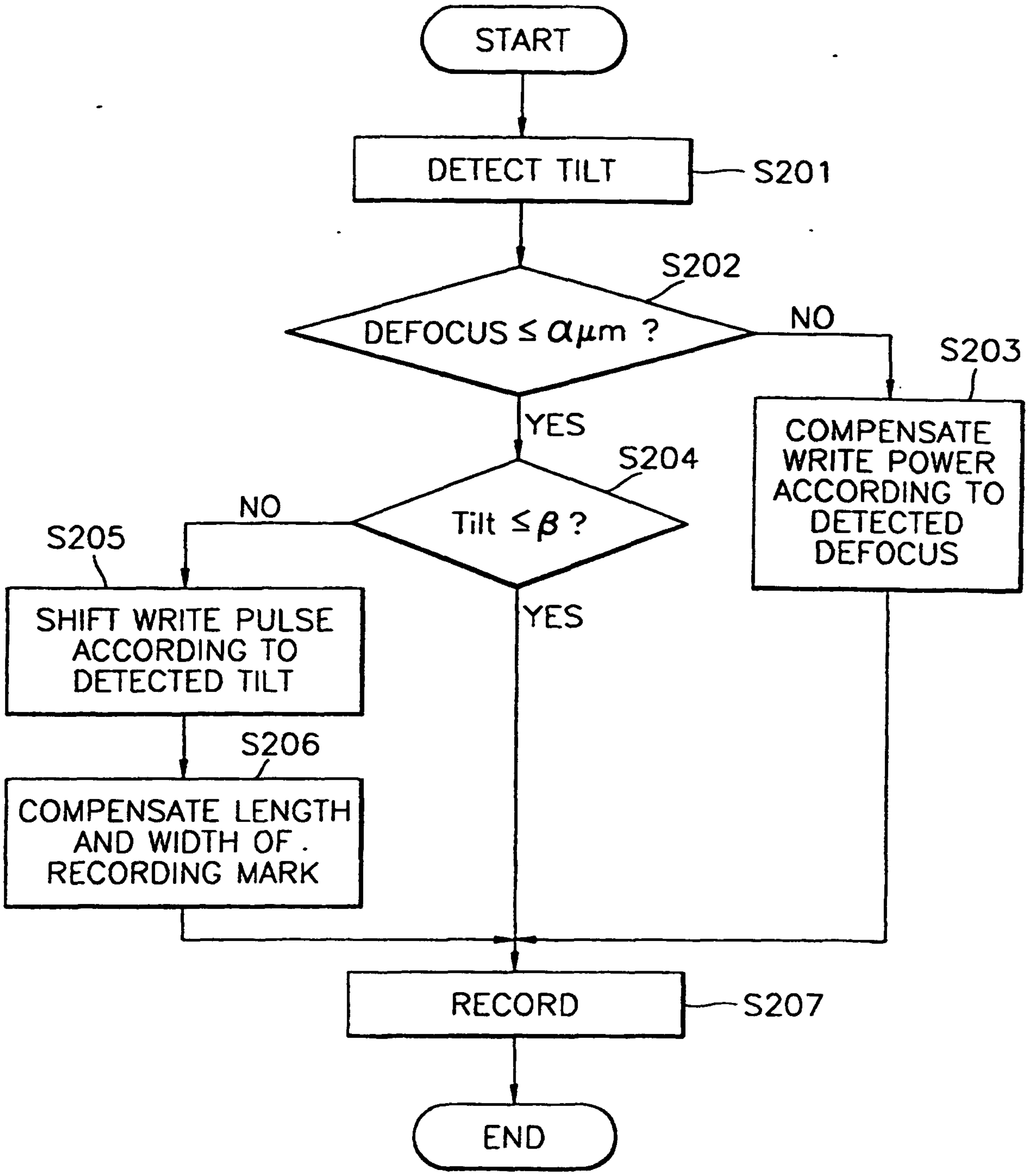
START
DETECT TILT
S201
S202
DEFOCUS ≤ αμm ?
NO
S203
COMPENSATE WRITE POWER ACCORDING TO DETECTED DEFOCUS
YES
S204
Tilt ≤β ?
NO
S205
SHIFT WRITE PULSE ACCORDING TO DETECTED TILT
YES
S206
COMPENSATE LENGTH AND WIDTH OF RECORDING MARK
RECORD
S207
END

FIG. 30

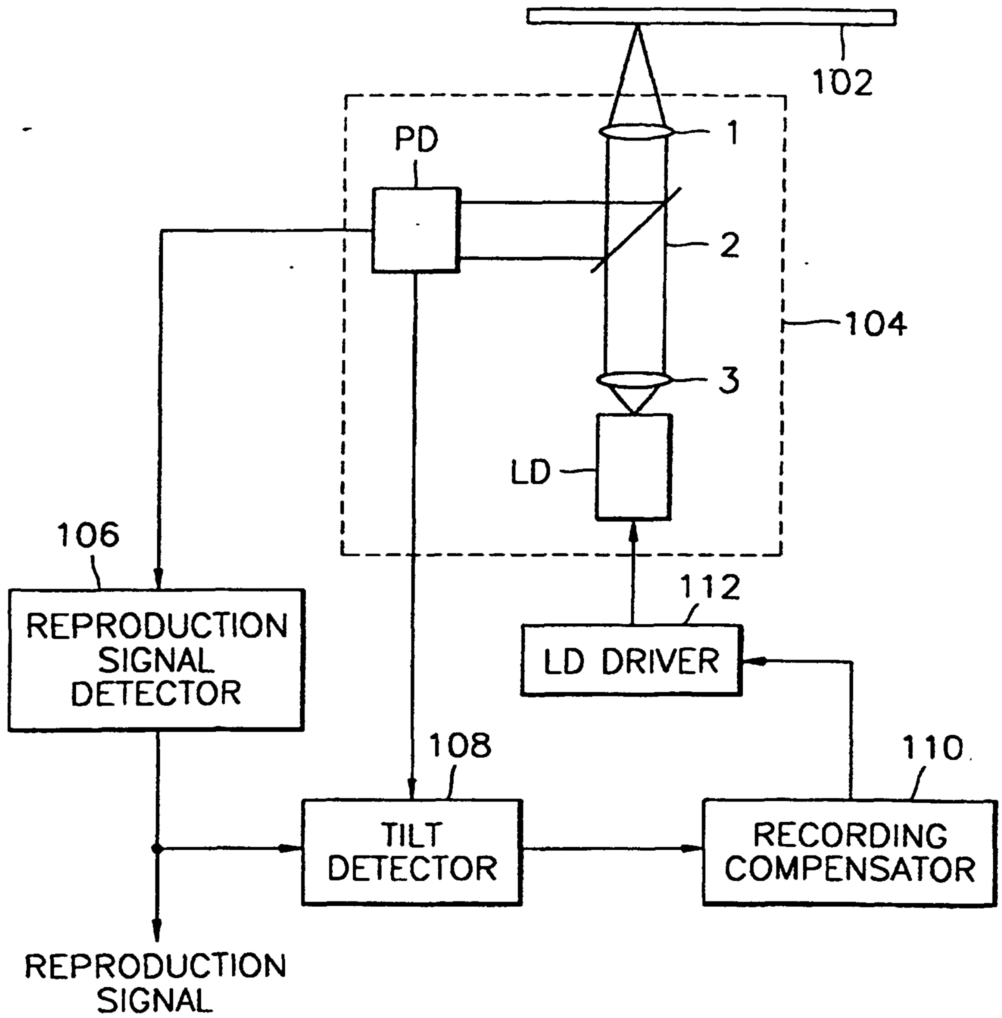
102
PD
1
2
104
3
LD
106
REPRODUCTION SIGNAL DETECTOR
112
LD DRIVER
108
110
TILT DETECTOR
RECORDING COMPENSATOR
REPRODUCTION SIGNAL

FIG. 31

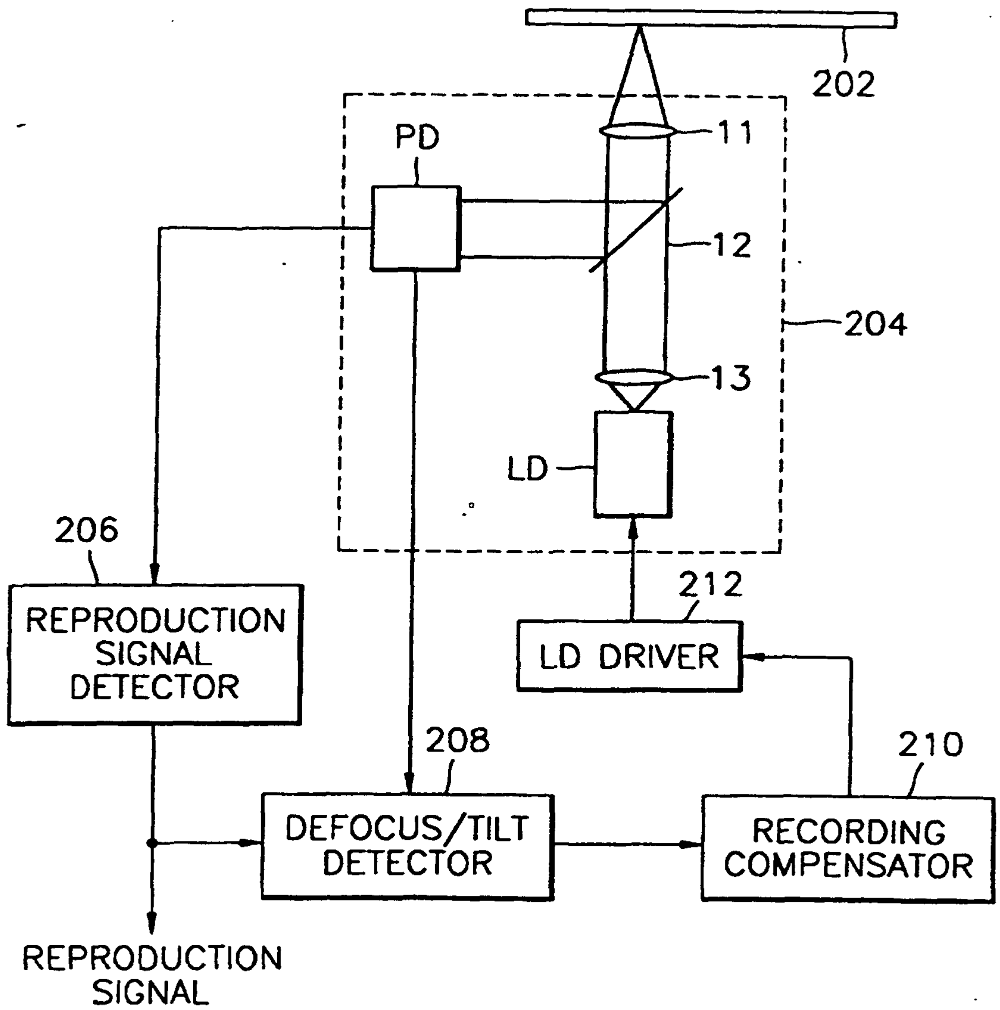
202
PD
11
12
204
13
LD
206
212
REPRODUCTION SIGNAL DETECTOR
LD DRIVER
208
210
DEFOCUS/TILT DETECTOR
RECORDING COMPENSATOR
REPRODUCTION SIGNAL